# EUROPÄISCHE PATENTSCHRIFT

(11) **EP 3 402 736 B1**
(45) Veröffentlichungstag und Bekanntmachung des Hinweises auf die Patenterteilung: **02.11.2022**
(21) Anmeldenummer: 17700340.7
(22) Anmeldetag: 12.01.2017
(51) Int. Cl.: B67D 1/08

(54) **DISPENSER MIT EINER KARTUSCHENHALTERUNG**
DISPENSER HAVING A CARTRIDGE HOLDER
DISTRIBUTEUR À SUPPORT DE CARTOUCHE

(30) Priorität: 12.01.2016 DE 102016200254; 01.07.2016 DE 102016212012; 01.07.2016 DE 102016212013; 27.09.2016 DE 102016218509; 27.09.2016 DE 102016218507; 29.09.2016 DE 102016218884
(43) Veröffentlichungstag der Anmeldung: 21.11.2018
(60) Teilanmeldung: 19157799.8
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE); FISCHER, Daniel, 8590 Romanshorn (CH)
(74) Vertreter: Loock, Jan Pieter
(86) Internationale Anmeldenummer: PCT/EP2017/050561
(87) Internationale Veröffentlichungsnummer: WO 2017/121796

(56) Entgegenhaltungen:
- EP-A1- 2 017 221
- WO-A1-96/36556
- US-A- 4 323 171

## Beschreibung

### Stand der Technik

Die Erfindung betrifft einen Dispenser mit einer Kartuschenhalterung.

Solche Systeme sind aus dem Stand der Technik, beispielsweise aus EP 2 017 221 A1, US 4,323,171 und WO 96/36556 A1, grundsätzlich bekannt und werden zur Herstellung von Getränken aus vorportionierten Kartuschen verwendet. Die Herstellung von Getränken mit solchen Systemen ist für den Anwender äußerst komfortabel, da er lediglich eine Kartusche in den Dispenser einsetzen und eine Startprozedur initiieren muss. Der Dispenser, auch als Getränkezubereitungsmaschine bezeichnet, übernimmt dann vollautomatisiert die Erzeugung des Getränks, das heißt insbesondere, dass das Lebensmittel- oder Getränkesubstrat mit einer vorbestimmten Menge an Flüssigkeit, insbesondere kaltem und karbonisiertem Wasser vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann.

Der eingangs genannte Dispenser ist also aus dem Stand der Technik bekannt und wird dafür eingesetzt mittels Kartuschen beispielsweise Kaltgetränke herzustellen. Wichtig ist, dass die Kartusche sicher im dem Dispenser gehalten ist, so dass zum einen keinerlei Leckage zum anderen aber auch keine Rückkontamination stattfindet.

### Offenbarung der Erfindung

Es war deshalb die Aufgabe der vorliegenden Erfindung einen Dispenser zur Verfügung zu stellen, der diesen Anforderungen gerecht wird. Insbesondere solle eine leckagefreie Getränkeherstellung ohne Rückkontamination des Dispensers ermöglicht werden. Der Dispenser soll gleichzeitig einen hohen Bedienkomfort bieten und kostengünstig realisierbar sein. Eine weitere Aufgabe der vorliegenden Erfindung ist es, die Schaumbildung auf dem Getränk oder Lebensmittel kontrolliert einzustellen.

Gelöst wird die Aufgabe mit einem Dispenser gemäß Anspruch 1.

Die zu diesem Gegenstand der vorliegenden Erfindung gemachten Ausführungen gelten für die anderen Gegenstände der vorliegenden Erfindung gleichermaßen und umgekehrt.

Die vorliegende Erfindung betrifft einen Dispenser mit einer Kartuschenhalterung, die die Kartusche an dem Dispenser lagert und die Kartusche abstützt und/oder führt. Die Kartusche weist einen Hohlraum auf, in dem sich ein Getränke- und/oder Lebensmittelsubstrat befindet. Dieses Substrat ist vorzugsweise flüssig und insbesondere ein Konzentrat und wird mit einem Lösemittel, insbesondere Wasser, zur Herstellung des Getränks oder Lebensmittels gemischt und dann in einem Behälter, insbesondere einem Glas, das vorzugsweise auf einer unterhalb der Kartuschenhalterung angeordneten Auflage des Dispensers steht, aufgefangen. Das Getränke- und/oder Lebensmittelsubstrat umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-)Getränke.

Erfindungsgemäß ist nun eine Führung und/oder Verdrehsicherung an der Kartuschenhalterung vorgesehen. Dadurch wird sichergestellt, dass die Kartusche zum einen zumindest bezüglich einer Raumrichtung eine bestimmte Lage relativ zu dem Dispenser einnimmt zum anderen wird verhindert, dass sich die Kartusche vor oder während der Herstellung des Getränks verdreht oder in einer falschen Orientierung eingesetzt wird. Auf diese Weise wird auch sichergestellt, dass falls die Kartusche mit einer Produktidentifikationskennung ausgestattet ist, welche von einem Kennungsdetektor des Dispensers auszulesen ist, die Kennung stets dem Detektor zugewandt ist, so dass ein zuverlässiges und fehlerfreies Auslesen ermöglicht wird.

Vorzugsweise weist die Kartuschenhalterung eine Ausnehmung auf, die die Kartusche und/oder die Kartuschenaufnahme zumindest teilweise aufnimmt. Vorzugsweise wirken die Ausnehmung in der Kartuschenhalterung und die Kartusche oder Kartuschenaufnahme zumindest teilweise formschlüssig zusammen und wirken so als Auflager und/oder Verdrehsicherung. Vorzugsweise erstreckt sich die Ausnehmung bis zum Rand, so dass der Umfang der Ausnehmung an einer Stelle offen ist. Dort kann die Ausbuchtung in der Kartuschenaufnahme platziert werden. Alternativ weist die Ausnehmung eine Ausbuchtung für die Ausbuchtung an der Kartuschenaufnahme auf.

Alternativ oder zusätzlich weist die Kartuschenhalterung eine Führung auf, die mit dem Umfang der Kartuschenaufnahme und/oder die Kartusche zusammenwirkt. Diese Führung kann beispielsweise ein Stehkragen sein, der sich vorzugsweise im Randbereich der Ausnehmung in der Kartuschenhalterung erstreckt. Die Führung erstreckt sich vorzugsweise in einem rechten Winkel zu der Horizontalen und verhindert ein Kippen der Kartusche relativ zu der Vertikalen.

Gemäß einer bevorzugten Ausführungsform weisen die Ausnehmung und/oder die Führung eine Öffnung für einen Vorsprung/Ausbuchtung an der Kartuschenaufnahme auf, der als Verdrehsicherung oder als zusätzliche Stabilisierung wirken kann.

Erfindungsgemäß weist die Kartuschenhalterung einen Flüssigkeitsanschluss auf. Mit diesem Flüssigkeitsanschluss wird das Lösemittel zur Herstellung des Getränks zur Verfügung gestellt. Der Flüssigkeitsanschluss der Kartuschenhalterung wird vorzugsweise mit dem Flüssigkeitszulauf in der Kartuschenaufnahme, insbesondere flüssigkeitsdicht, in Verbindung gebracht. Gemäß einer weiteren bevorzugten Ausführungsform der vorliegenden Erfindung ist vorgesehen, dass der Flüssigkeitsanschluss mit Fluid gespeist wird, welches durch ein Kühlaggregat gekühlt wird, wobei das Kühlaggregat Teil des Dispensers oder eines mit dem Dispenser in Wirkverbindung stehenden separaten Kühlschranks ist. In vorteilhafter Weise sind somit Kaltgetränke herstellbar, auch wenn die Kartusche selbst nicht gekühlt ist und beispielweise Zimmertemperatur aufweist. Die Integration des Systems in einen beste-henden Kühlschrank hat den Vorteil, dass das bestehende Kühlaggregat des Kühlschranks für den Dispenser in effizienter Weise einfach mitgenutzt werden kann. Insbesondere bei sogenannten "side-by-side"-Kühlschränken (oft auch als amerikanische Kühlschränke bezeichnet) findet sich in der Front ausreichend Bauraum zur Integration des Dispensers. Denkbar ist, dass es sich bei dem Dispenser um ein Nachrüstset für einen solchen Kühlschrank handelt. Das Kühlaggregat umfasst vorzugsweise eine Kompressorkühleinheit, eine Absorberkühleinheit oder einen thermoelektrischen Kühler. Gemäß einer weiteren bevorzugten Ausführungsform der vorliegenden Erfindung ist vorgesehen, dass der Flüssigkeitsanschluss mit Fluid gespeist wird, welches durch einen Karbonisierer mit Kohlensäure versetzt wird. Denkbar ist, dass der Karbonisierer Teil des Dispensers ist und wobei der Karbonisierer eine Aufnahme für eine CO2-Patrone und eine Zuführeinrichtung zum Versetzen des Fluides mit CO2 aus der CO2-Patrone aufweist. Vorteilhafterweise lassen sich mit dem System somit auch mit Kohlensäure versetzte (Erfrischungs-) Getränke herstellen. Alternativ wäre auch denkbar, dass der Karbonisierer einen externen CO2-Anschluss aufweist. Das Fluid umfasst insbesondere Wasser, welches aus einer Wasserleitung oder einem Wassertank des Dispensers mittels einer oder mehrerer Pumpen, vorzugsweise Membranpumpen, bereitgestellt wird. Die Förderung des Wassers zum Flüssigkeitsanschluss wird vorzugsweise mittels eines Durchflusssensors, beispielsweise einem Ultraschalldurchflusssensor oder einem magnetisch-induktivem Durchflusssensor, überwacht.

Erfindungsgemäß ist vorgesehen, dass die Kartuschenhalterung einen mit einer Druckluftquelle verbundenen Druckluftauslass aufweist. Der Druckluftauslass fungiert als Kartuschenentladeeinrichtung und dient dazu, Druckluft von außen in den Hohlraum der Kartusche einzuleiten, wodurch das Lebensmittel- und/oder Getränkesubstrat aus dem Hohlraum in eine Mischkammer der Kartuschenaufnahme zu drücken. Die Druckluft wird insbesondere von dem Dispenser bereitgestellt. Die Kartuschenaufnahme weist vorzugsweise einen Gaseinlass auf, welcher beim Einsetzen der Kartuschenaufnahme in die Kartuschenhalterung direkt an den Druckluftauslass der Kartuschenhalterung angekoppelt wird. Dies hat den Vorteil, dass eine Rückkontamination in Richtung des Dispenser wirksam vermieden wird, weil der Druckkanal sofort beim Einsetzen des Kartuschensystems in die Kartuschenhalterung unter Druck steht und somit verhindert wird, dass Lebensmittel- und/oder Getränkesubstrat in Richtung des Dispensers und insbesondere in Richtung der Druckluftquelle wandert. Das Substrat kann sich ausgehend von dem Hohlraum in der Kartusche somit lediglich in Richtung der Mischkammer bewegen.

Gemäß einer weiteren bevorzugten Ausführungsform der vorliegenden Erfindung ist vorgesehen, dass die Kartuschenhalterung ein Auslöseelement aufweist, um ein Aufstechmittel der Kartuschenaufnahme von einer eingefahrenen Position in eine ausgefahrene Position zu überführen. Die Kartusche ist vorzugsweise mit einer Membran, beispielsweise eine Dichtfolie, verschlossen. Die Kartuschenaufnahme weist vorzugsweise ein Aufstechmittel auf, welches zwischen einer eingefahrenen Position, in welcher das Aufstechmittel von der Membran beabstandet ist, und einer ausgefahrenen Position, in welcher das Aufstechmittel die Membran durchsticht und bis in den Hohlraum ragt, verschiebbar ist. Die Kartusche wird also von dem Aufstechmittel geöffnet. Zur Überführung des Aufstechmittels in die ausgefahrene Position weist die Kartuschenhalterung das Auslöseleement auf. Denkbar ist, dass das Auslöseelement einen feststehenden Vorsprung umfasst, der beim Einsetzen des Kartuschensystems in die Kartuschenhalterung in Anlage mit dem Aufstechmittel gelangt und das Aufstechmittel durch eine Relativbewegung zwischen Kartuschensystem und Auslöseelement in die ausgefahrene Position treibt. Besonders bevorzugt ist in das Aufstechmittel der Druckluftauslass integriert.

Vorzugsweise umfasst die Kartuschenhalterung einen Befestigungsflansch umfasst, welcher die Kartuschenaufnahme beim oder nach dem Einsetzen in den Halter formschlüssig und/oder kraftschlüssig umgreift. Der Befestigungsflansch umfasst ferner eine Auslösemechanik, die derart konfiguriert ist, dass eine Betätigung der Auslösemechanik zu einem Umgreifen der Kartuschenaufnahme durch den Befestigungsflansch und/oder zu einem Verschieben des Befestigungsflansches derart, dass eine Relativbewegung zwischen Kartuschenaufnahme und dem in Kontakt mit dem Aufstechmittel stehenden Auslöseelement erzeugt wird, wodurch das Aufstechmittel von der eingefahrenen Position in die ausgefahrene Position überführt wird, führt. Die Auslösemechanik umfasst insbesondere einen Handhebel zur manuellen Betätigung derselben umfasst, wobei vorzugsweise der Handhebel um eine zur Längsachse der Kartusche im Wesentlichen parallele Drehachse drehbar ausgebildet ist. Ferner umfasst die Auslösemechanik vorzugsweise ein Übersetzungsgetriebe, welche eine Drehbewegung des Handhebels um die zur Längsachse parallele Drehachse in eine zur Längsachse im Wesentlichen parallele Translationsbewegung übersetzt. Nachdem das Kartuschensystem in die Kartuschenhalterung eingesetzt wurde, wird der Handhebel durch den Benutzer betätigt, wodurch das Kartuschensystem fest umgriffen und linear gegen das Auslöseelement verschoben wird. Durch die Verdrehsicherung und die Übersetzung der Drehbewegung in die lineare Translationsbewegung wird sichergestellt, dass die Ortientierung der Kartusche relativ zum Dispenser konstant bleibt. Hierdurch wird vorteilhafterweise das im Folgenden beschriebene ein Auslesen der Produktidentifikationskennung vereinfacht.

Gemäß einer weiteren bevorzugten Ausführungsform der vorliegenden Erfindung ist vorgesehen, dass der Dispenser einen Kennungsdetektor zum Auslesen einer Produktidentifikationskennung auf der Kartusche und/oder der Kartuschenaufnahme aufweist, wobei der Kennungsdetektor vorzugsweise oberhalb und/oder hinter dem Halter angeordnet ist. Vorzugsweise ist die Produktidentifikationskennung in einen Barcode, einen RFID-Code, einen QR-Code, einen Data-Matrix-Code, einen Farbcode, einen Hologrammcode oder dergleichen eingebettet. In vorteilhafter Weise wird somit ein automatisches Auslesen der Produktidentifikationskennung möglich. Der Kennungsdetektor umfasst insbesondere einen optischen Sensor, wie beispielsweise eine CCD-Kamera, welche den Barcode oder QR-Code oder Data-Matrix-Code automatisch ausliest, wenn die Kartusche in die Getränkezubereitungsmaschine eingesetzt ist. Alternativ umfasst der Kennungsdetektor eine Sende- und Empfangsantenne zum automatischen Auslesen der RFID-Codes. Alternativ wäre denkbar, dass die Produktidentifikationskennung auch in andere automatisch auslesbare Computerchips eingebettet wird. Der Begriff QR-Code umfasst im Sinne der vorliegenden Erfindung insbesondere jedweden Data-Matrix-Code.

Insofern werden die Begriff QR-Code und Data-Matrix-Code synonym verwendet. Alternativ oder zusätzlich wäre auch denkbar, dass die Produktidentifikationskennung einen Strichcode, einen Punktcode, einen Binärcode, einen Morsecode, Braillezeichencode (Blindenschrift) oder dergleichen umfasst. Der Code kann dabei auch in eine dreidimensionale Struktur, wie beispielweise ein Relief eingebettet sein. Die Produktidentifikationskennung umfasst insbesondere die sogenannte Produktidentifikationsnummer, insbesondere einen Universal Product Code (UPC), eine European Article Number (EAN), einen GS1-Code, eine Global Trade Item Number (GTIN) oder dergleichen. Auf diese Weise braucht hierfür kein neues Codesystem eingeführt werden. Insbesondere läuft die Produktidentifikationskennung unter dem GS1-Standard. Die Produktidentifikationskennung ist vorzugsweise direkt auf die Kartusche gedruckt, geklebt und/oder in die Oberfläche der Kartusche eingebracht, bspw. durch eine (Laser-)Gravur, Stanzen oder direkt bei der Herstellung der Kartusche. Alternativ wäre auch denkbar, dass die Kartusche mit einem Überzug, beispielsweise einem Sleeve, zumindest teilweise umhüllt wird, auf welchem die Produktidentifikationskennung angeordnet ist. Der Überzug kann mit der Kartusche auch verklebt oder verschweißt sein. Der Überzug oder das Sleeve könnten aus einer Kunststofffolie, einem Textil oder Papier hergestellt sein.

Ein weiterer oder bevorzugter Gegenstand der vorliegenden Erfindung ist ein Dispenser, der eine Auflage für einen Behälter aufweist, im dem das fertiggestellte Getränk oder Lebensmittel aufgefangen wird, wobei die Auflage höhenverstellbar und/oder schwenkbar vorgesehen ist.

Vorzugsweise ist die Auflage, beispielsweise um eine Achse oder um einen Punkt so schwenkbar vorgesehen, dass der Behälter, insbesondere beim Zustrom des fertiggestellten Getränks oder des Lebensmittels schräg gestellt werden kann. Dadurch ist es möglich, die Schaumbildung auf dem Getränk zu beeinflussen. Die Auflage kann manuell oder motorisch verstellt werden. Der Dispenser kann ein Mittel, beispielsweise eine Kamera aufweisen, die den Schaumstand auf dem Getränk oder Lebensmittel ermittelt und anhand des Signals dieses Mittels die Schrägstellung entsprechend verändert wird. Weiterhin bevorzugt kann die Kartusche, die zur Herstellung des Getränks oder Lebensmittels eingesetzt wird eine Information über die einzusetzende Schrägstellung aufweisen. Gemäß noch einer weiteren bevorzugten Ausführungsform weist die Kartusche eine Kennung auf, anhand derer sie identifiziert werden kann. Sobald die Kartusche erkannt ist, sind Informationen über die gewünschte Schrägstellung des Behälters abrufbar. Analoges gilt für den Behälter, in dem das Getränk oder Lebensmittel aufgefangen wird. Auch dieses kann Informationen und/oder eine Kennung aufweisen, mit denen die gewünschte Schrägstellung ermittelbar ist. Weiterhin ist die Auflage vorzugsweise höhenverstellbar, so dass die Auflage beispielsweise an unterschiedliche Glasgrößen anpassbar ist und/oder die Schaumbildung durch die Länge der Fallstrecke beeinflussbar ist.

Des Weiteren betrifft die vorliegende Erfindung ein System mit einer Kartuschenaufnahme und/oder einer Kartusche, wobei die Kartuschenaufnahme die Kartusche reversibel oder irreversibel insbesondere teilweise aufnimmt. Die Kartusche hat einen Hohlraum, in dem sich die Getränke- und/oder Lebensmittelsubstanz befindet und die vor der Getränke- und/oder Lebensmittelherstellung, insbesondere durch die Membran, hermetisch verschlossen ist. Zur Herstellung des Getränks und/oder Lebensmittels wird die Kartusche dann geöffnet, insbesondere wird die Membran aufgestochen, und das Substrat läuft/strömt, insbesondere unterstützt durch Einleiten von Druckluft in den Hohlraum, in eine Mischkammer der Kartuschenaufnahme, die auch über einen Zulauf für ein Verdünnungsmittel (auch als Lösungsmittel bezeichnet), insbesondere Wasserzulauf, verfügt, das mit dem Substrat gemischt wird, um das fertige Getränk oder Lebensmittel zu erzeugen, das durch einen ebenfalls an der Kartuschenaufnahme vorgesehenen Ablauf aus der Mischkammer herausläuft. Der Volumenstrom des Lösungsmittels ist dabei in der Regel wesentlich größer als der Volumenstrom des Substrats. Die Kartusche und die mit der Kartusche verbundene Kartuschenaufnahme bilden zusammen ein Kartuschensystem, welches in die Kartuschenhalterung des Dispensers einsetzbar ist.

Vorzugsweise ist der Strömungsquerschnitt, d.h. der Querschnitt, der für Strömung der Flüssigkeit, insbesondere des Lösungsmittelstroms und/oder des Gemischs aus Lösungsmittel und Substrat zur Verfügung steht, nun so vorgesehen, dass sich bezogen auf die Strömungsrichtung des Lösungsmittels die Strömungsgeschwindigkeit zunächst verlangsamt und dann wieder beschleunigt. Die Beschleunigung, die durch eine Strömungsquerschnittsverengung erreicht wird, findet möglichst statt, nachdem das Lösungsmittel und das Substrat vermischt worden sind.

Gemäß einem weiteren bevorzugten Gegenstand der vorliegenden Erfindung weist die Mischkammer eine Ausbuchtung auf. Diese Ausbuchtung ragt vorzugsweise aus dem Umfang, insbesondere dem seitlichen Umfang, der sich zwischen den beiden Stirnseiten der Kartuschenaufnahme erstreckt, heraus. Vorzugsweise ist die Ausbuchtung Teil der Mischkammer. Vorzugsweise ist der Umfang der Mischkammer im Wesentlichen kreisförmig gestaltet und die Ausbuchtung rang aus dieser Kreisform heraus. Gemäß einer besonders bevorzugten Ausführungsform der vorliegenden Erfindung ist der Ablauf des fertiggestellten Getränks oder Lebensmittels in der Ausbuchtung vorgesehen.

Gemäß noch einem bevorzugten Gegenstand der vorliegenden Erfindung weist die Kartuschenaufnahme einen Befestigungs- und/oder Sicherungsring aufweist. Dieser Befestigungs- und/oder Sicherungsring nimmt vorzugsweise die Kartusche, die an der Kartuschenaufnahme befestigt wird, auf. Vorzugsweise ist der Befestigungs- und/oder Sicherungsring mit einer Sollbruch- und/oder Solldeformationsstelle an der Mischkammer vorgesehen. Vor der Herstellung eines Getränks oder Lebensmittels wird diese Stelle zerstört und oder verformt, insbesondere irreversibel verformt. Dies kann beispielsweise durch eine Bewegung der Kartusche und der Kartuschenaufnahme relativ zueinander erfolgen. Durch die Deformation und/oder Zerstörung kann die Kartuschenaufnahme nur einmal benutzt werden und/oder der Verbund zwischen der Kartuschenaufnahme und der Kartusche kann nicht mehr gelöst werden.

Vorzugsweise ist in der Mischkammer mindestens ein Mischelement vorgesehen, das für eine Verwirbelung des Lösemittels oder des Gemischs von Lösemittel und Substrat sorgt. Vorzugsweise ist das Mischelement als Ausbuchtung und/oder Anformung im Boden der Mischkammer vorgesehen. Vorzugsweise ist das Mischelement so gestaltet, dass Kohlensäure, die in dem Lösemittel gelöst ist, nicht oder nur geringfügig ausgast. Vorzugsweise ist das Mischelement so gestaltet, das es nur einen geringen Druckverlust aufweist.

Vorzugsweise weist die Kartuschenaufnahme ein Aufstechmittel auf, dass die Membran vor der Herstellung des Getränks oder Lebensmittels perforiert. Dieses Aufstechmittel ist beispielsweise als Dorn gestaltet, der aus dem Boden der Mischkammer ragt. Die Kartuschenaufnahme weist vorzugsweise eine Dornführung auf, in welcher das Aufstechmittel verschiebbar gelagert ist. Das Aufstechmittel ist auf diese Weise zwischen einer eingefahrenen Position, in welcher das Aufstechmittel von der Membran beabstandet ist, und einer ausgefahrenen Position, in welcher das Aufstechmittel die Membran durchsticht und bis in den Hohlraum der Kartusche ragt, verschiebbar.

Vorzugsweise weist das Aufstechmittel an seinem äußeren Umfang mindestens eine, vorzugsweise mehrere Ein- und/oder Ausbuchtungen auf, die als Ablauf für das Substrat dienen. Die Menge und die Größe der Ein- und/oder Ausbuchtungen hängt vorzugsweise von der Viskosität des Substrats ab. Die Außenwandung des Aufstechmittels ist also mit wenigstens einem Seitenkanal zum Leiten des Substrats in Richtung der Mischkammer, wenn die Membran durchstochen ist, versehen. Durch den seitlich am Aufstechmittel ausgebildeten Seitenkanal kann das Substrat dann an der Membran vorbei in Richtung Mischkammer fließen. Vorzugsweise sind eine Mehrzahl von Seitenkanälen am Aufstechmittel ausgebildet. Die Seitenkanäle sind insbesondere jeweils in Form einer einseitig offenen Nut ausgebildet. Denkbar ist, dass der Querschnitt der Seitenkanäle und/oder die Anzahl der Seitenkanäle an die Viskosität des Substrats angepasst ist, so dass die Seitenkanäle den Fluss des Substrats in Richtung Mischkammer kontrollieren bzw. begrenzen. Bei einer hohen Viskosität werden mehrere Seitenkanäle oder Seitenkanäle mit größerem Querschnitt verwendet, während bei einer niedrigeren Viskosität weniger Seitenkanäle oder Seitenkanäle mit geringerem Querschnitt vorgesehen sind. Für jede Kartusche existiert somit eine passende Kartuschenaufnahme.

Vorzugsweise ist in das Aufstechmittel eine Druckluftleitung, insbesondere in Form eines inneren Kanals, integriert, wobei an einer der Kartusche abgewandten Seite des Aufstechmittels ein, insbesondere von außerhalb der Kartuschenaufnahme zugänglicher Druckluftanschluss der Druckluftleitung zur Verbindung mit einer Druckluftquelle ausgebildet ist und wobei an einer dem Hohlraum der Kartusche zugewandten Seite des Aufstechmittels ein Druckluftausgang der Druckluftleitung zum Einblasen der Druckluft in die Kartusche ausgebildet ist. Vorzugsweise wird bereits beim Einsetzen des Kartuschensystems aus Kartusche und Kartuschenaufnahme in die Kartuschenhalterung bereits Druckluft an den Druckluftanschluss angelegt, um eine etwaige Rückkontamination des Dispensers zu verhindern. Alternativ wird das Aufstechmittel durch die über den Dispenser angelegte Druckluft von der eingefahrenen Position in die ausgefahrene Position verfahren. Anstelle von Druckluft kann auch CO2 in den Hohlraum eingeleitet werden, um das Substrat von dem Hohlraum in die Mischkammer zu überführen.

Vorzugsweise weist das Aufstechmittel also einen Kanal auf, der in oder im Bereich der Spitze endet. Durch diesen Kanal kann ein Gas, insbesondere Luft oder CO₂ in die Kartusche geblasen werden, um die Abgabe des Substrats zu beschleunigen und/oder zu dosieren.

Das System ist vorzugsweise derart ausgebildet, dass eine Kopplung des Druckluftanschlusses mit dem Druckluftauslass der Kartuschenhalterung erfolgt, wenn die Kartuschenaufnahme in die Kartuschenhalterung eingesetzt ist und/oder die Auslösemechanik für den Befestigungsflansch betätigt wird. Die Druckluftleitung wird somit frühestmöglich unter Druck gesetzt, so dass eine Rückkontamination des Dispensers durch das Substrat unterbunden wird.

Vorzugsweise sind der Zulauf und der Ablauf an gegenüberliegenden Enden der Kartuschenaufnahme vorgesehen. Besonders bevorzugt ist das Aufstechmittel in einer Flucht mit dem Zulauf und dem Ablauf vorgesehen.

Gemäß einem weiteren bevorzugten Gegenstand der vorliegenden Erfindung ist der Auslauf beweglich, insbesondere schwenkbar, an der Mischkammer vorgesehen oder weist ein Mittel auf, mit dem der Auslauf ausgerichtet, insbesondere in Richtung der Seitenwand des Gefäßes, das das fertiggestellte Getränk oder Lebensmittel aufnimmt, werden kann. Diese Ausführungsform ist insbesondere bei Getränken oder Lebensmitteln, die zu Schaumbildung neigen vorteilhaft. Das Bewegen des Auslaufs kann manuell oder motorisch erfolgen. Für den Fall, dass die Kartusche eine Identifikation aufweist, kann das Schwenken automatisch erfolgen, nachdem der Dispenser die Kartusche erkannt hat. Weiterhin kann ein Mittel vorhanden sein, dass den Schaum bestimmt. Basierend auf dieser Analyse kann dann die Einstellung des Auslaufs erfolgen.

Die Kartusche wird vorzugsweise aus Kunststoff, insbesondere durch ein Moulding- und/oder ein Blasverfahren hergestellt. Die Kartusche weist eine Seitenwand auf, die beispielsweise einen runden, rechteckigen, quadratischen, konischen oder ovalen Querschnitt aufweist. An einem Ende der Seitenwand ist in der Regel ein Boden, insbesondere einstückig vorgesehen. Die Seitenwand und gegebenenfalls der Bodenbereich spannen einen Hohlraum auf, in dem ein Getränke- und/oder Lebensmittelsubstrat, insbesondere in flüssiger Form vorgesehen ist. An dem anderen Ende des Wandbereichs ist ein Verbindungsbereich vorgesehen, mit dem die Kartusche mit der Kartuschenaufnahme verbunden wird. Diese Kartuschenaufnahme kann Teil eines Dispensers oder ein vom Dispenser separates Bauteil sein.

Vorzugsweise ist der Verbindungsbereich so vorgesehen, dass er wenigstens einen Flansch aufweist. Der Flansch steht aus dem Verbindungsbereich hervor und steht vorzugsweise in einem Winkel, besonders bevorzugt einem rechten Winkel von einem Wandbereich des Verbindungsbereichs ab. Zur Herstellung des Getränks oder Lebensmittels ist der Flansch vorzugsweise horizontal ausgerichtet. Vorzugsweise ist der Flansch aus Vollmaterial, d.h. nicht hohl gefertigt. Insbesondere ist der Flansch gespritzt.

Weiterhin bevorzugt ist der Flansch mit einem Positionier- und oder Abdeckmittel versehen. Das Positioniermittel stellt sicher, dass die Kartusche nur in einer bestimmten Position, insbesondere in einem bestimmten Drehwinkel, insbesondere Bezogen auf die Längsmittelachse der Kartusche an dem Dispenser und/oder an der Kartuschenaufnahme angeordnet werden kann. Das Abdeckmittel deckt einen Bereich, insbesondere einen Bereich, durch den das fertiggestellte Getränk oder Lebensmittel fließt ab. Vorzugsweise sind das Positioniermittel und das Abdeckmittel identisch.

Vorzugsweise ist das Positioniermittel und/oder Abdeckmittel eine Ein- und/oder Ausbuchtung, die aus dem Flansch, insbesondere dessen Umfang hervorsteht. Vorzugsweise ist das Positioniermittel und/oder Abdeckmittel einstückig mit dem Flansch vorgesehen. Beispielsweise ist das Positioniermittel und/oder Abdeckmittel als Nase ausgebildet, die an einer Stelle an den Umfang des Flanschs angeformt ist. Die Dicke des Positioniermittels und/oder Abdeckmittels entspricht dabei zumindest im wesentlichen der Dicke des Flanschs.

Gemäß einer bevorzugten Ausführungsform ist zwischen dem Wandbereich und dem Verbindungsbereich ein Hals vorgesehen. Dieser Hals kann beispielsweise einen runden Querschnitt aufweisen. Der Hals stellt den Wandbereich des Verbindungsbereichs dar. Der Flansch schließt sich vorzugsweise rechtwinklig an den Hals an.

Vorzugsweise ist die Membran, die die Kartusche vor deren Gebrauch, insbesondere hermetisch verschließt, an dem Flansch, insbesondere dessen Stirnfläche, vorgesehen, insbesondere gesiegelt. Dafür kann der Flansch, insbesondere dessen Stirnfläche eine Wulst, insbesondere eine kreisringförmige Wulst aufweisen, die beim Siegeln mit dem Siegelwerkzeug zusammenwirkt. Vorzugsweise ist der äußere Umfang der Membran geringer als der äußere Umfang des Flansches.

Vorzugsweise ist im Wandbereich und/oder im Bereich des Halses ein Befestigungsmittel vorgesehen ist. Mit diesem Befestigungsmittel kann die Kartusche mit einem Dispenser verbunden werden. Das Befestigungsmittel kann beispielsweise eine Nut sein, in die ein Befestigungsmittel an dem Dispenser eingreift.

Die Kartuschenaufnahme kann fest mit der Kartusche verbunden oder ein Austauschteil sein, das nach dem Gebrauch der Kartusche von dieser entfernt und mit einer neuen Kartusche verbunden wird. Vorzugsweise ist die Kartuschenaufnahme aus Kunststoff, insbesondere im Spritzguss gefertigt. Vorzugsweise wird die Kartuschenaufnahme mit einem Dispenser verbunden.

Vorzugsweise deckt das Abdeckmittel, das an dem Flansch der Kartusche vorgesehen ist den Ablauf den Kartuschenaufnahme ab.

Vorzugsweise wirkt der Flansch an der Kartusche, insbesondere deren Umfang dichtend mit der Kartuschenaufnahme zusammen. Dafür kann der Umfang des Flansches beispielsweise in eine Nut in der Kartuschenaufnahme eingreifen. Diese Flansch/Nut-Verbindung kann auch als Kraftschluss dienen, um zu verhindern, dass sich die Kartusche relativ zu der Kartuschenaufnahme während der Getränke- oder Lebensmittelherstellung verschiebt und die Verbindung zwischen Kartusche und Kartuschenaufnahme undicht wird.

Gemäß einer bevorzugten Ausführungsform sind die Kartusche und die Kartuschenaufnahme. Insbesondere bevor die Membrane angestochen wird, längsverschieblich zueinander vorgesehen. Durch diese Längsverschiebung kann das Aufstechmittel dann mit der Membrane in Eingriff gebracht werden und diese durchstechen.

Vorzugsweise sind die Kartusche und die Kartuschenaufnahme drehfest miteinander verbunden.

Vorzugsweise weist das Aufstechmittel einen Kanal auf. Durch diesen Kanal kann ein Gas in die Kartusche gedrückt werden, das das Getränke- und/oder Lebensmittelsubstrat aus der Kartusche insbesondere in den Mischraum der Kartuschenaufnahme drückt.

Ein weiterer Gegenstand der vorliegenden Erfindung ist ein Verfahren zur Herstellung eines Getränks mit dem erfindungsgemäßen System, gekennzeichnet durch die folgenden Schritte:
- Einsetzen eines aus Kartusche und Kartuschenaufnahme zusammengesetzten Kartuschensystems in die Kartuschenhalterung,
- Herstellen einer Fluidverbindung zwischen einer Fluidquelle des Dispensers und dem Zulauf der Kartuschenaufnahme,
- Herstellen einer Druckluftverbindung zwischen einer Druckluftquelle des Dispensers und einem Druckluftanschluss der Kartuschenaufnahme,
- Perforieren der Membran durch Überführen des Aufstechmittels von der eingefahrenen Position in die ausgefahrene Position,
- Überführen des Getränke- und/oder Lebensmittelsubstrats von der Kartusche in die Mischkammer durch Einspeisen von Druckluft in die Kartusche durch den Druckluftanschluss,
- Einspeisen eines Verdünnungsmittels in die Mischkammer durch den Zulauf und
- Ableiten des in der Mischkammer durch Vermischung des Getränke- und/oder Lebensmittelsubstrats mit dem Verdünnungsmittel erzeugten Getränks mittels des Ablaufs.

Vorzugsweise wird das Verdünnungsmittel vor dem Einspeisen in den Zulauf gekühlt und/oder karbonisiert wird.

Gemäß einer bevorzugten Ausführungsform der vorliegenden Erfindung ist vorgesehen, dass das Aufstechmittel von einem Auslöseelement des Dispensers von der eingefahrenen Position in die ausgefahrene Position überführt wird, wobei die Kartuschenaufnahme vorzugsweise derart gegen das feststehende Auslöseelement bewegt wird, dass das Aufstechmittel von der eingefahrenen Position in die ausgefahrene Position überführt wird. Durch die Überführung des Aufstechmittels in die ausgefahrene Position wird die Membran perforiert und die Kartusche somit geöffnet. Durch das feststehende Auslöseelement muss lediglich das Kartuschensystem relativ zur Kartuschenhalterung bewegt werden.

Gemäß einer weiteren bevorzugten Ausführungsform der vorliegenden Erfindung ist vorgesehen, dass beim oder nach dem Einsetzen des Kartuschensystems in die Kartuschenhalterung ein Befestigungsflansch der Kartuschenhalterung von einer manuell oder motorisch betätigbaren Auslösemechanik derart betrieben wird, dass die Kartuschenaufnahme form- und/oder kraftschlüssig von dem Befestigungsflansch umgriffen wird und/oder dass der Befestigungsflansch derart verschoben wird, dass eine Relativbewegung zwischen der Kartuschenaufnahme und dem in Kontakt mit dem Aufstechmittel stehenden Auslöseelement erzeugt wird, wodurch das Aufstechmittel von der eingefahrenen Position in die ausgefahrene Position überführt wird. Denkbar ist, dass der Befestigungsflansch zusammenfahrbare Klauen umfasst, welche durch die Auslösemechanik einander annähern und auf diese Weise die Kartuschenaufnahme zwischen sich einklemmen. Anschließend oder gleichzeitig bewegt sich der Befestigungsflansch gegen das feststehende Auslöseelement, um das Aufstechmittel im Inneren der Kartuschenaufnahme gegen die Membran der Kartusche zu bewegen.

Vorzugsweise wird die Auslösemechanik durch ein manuelles Verschwenken eines Handhebels um eine zur Längsachse der Kartusche im Wesentlichen parallele Drehachse betätigt. Die Auslösemechanik übersetzt dabei mittels eines Übersetzungsgetriebes die Drehbewegung des Handhebels um die zur Längsachse parallele Drehachse in eine zur Längsachse im Wesentlichen parallele Translationsbewegung, wodurch der Befestigungsflansch in Richtung des Auslöseelements bewegt wird. Dies hat den Vorteil, dass die Orientierung der Kartusche um ihre Längsachse konstant bleibt, so dass sich insbesondere die Position der Produktidentifikationskennung relativ zum Kennungsdetektor nicht ändert.

Gemäß einer weiteren bevorzugten Ausführungsform der vorliegenden Erfindung ist vorgesehen, dass zeitlich vor, während oder nach dem Einsetzen des Kartuschensystems in die Kartuschenhalterung und/oder des Einspeisens von Druckluft in die Kartusche und/oder des Einspeisens des Verdünnungsmittels in die Mischkammer und/oder der Verschiebung des Befestigungsflansches gegenüber dem Auslöseelement die Produktidentifikationskennung von dem Kennungsdetektor ausgelesen wird. Die ausgelesene Produktidentifikationskennung wird vorzugsweise von einer Auswerteeinheit ausgewertet, wobei das Einspeisen der Druckluft und/oder des Verdünnungsmittels und/oder das Verschieben des Befestigungsflansches gegenüber dem Auslöseelement nur dann erfolgt, wenn die Produktidentifikationskennung von der Auswerteeinheit verifiziert werden kann. Auf diese Weise wird sichergestellt, dass der Dispenser nur mit bekannten oder für den Dispenser zertifizierten Kartuschensysteme in Betrieb genommen werden kann, so dass eine Beschädigung des Dispensers oder einer Verletzungsgefahr des Benutzers aufgrund der versehentlichen Verwendung falscher Kartuschensysteme, welche beispielsweise dem Druck nicht standhalten können, vermieden werden.

Denkbar ist auch, dass die Eigenschaften des eingespeisten Verdünnungsmittels und insbesondere der zeitliche Verlauf des Volumenstroms, Gesamtvolumen, Druck, Förderpausen, Temperatur und/oder Carbonisierung des eingespeisten Verdünnungsmittels in Abhängigkeit der verifizierten Produktidentifikationskennung gesteuert werden. Alternativ oder zusätzlich werden auch die Eigenschaften der eingespeisten Druckluft und insbesondere der zeitliche Verlauf des Volumenstroms, Gesamtvolumen, Förderpausen und/oder Druck der eingespeisten Druckluft in Abhängigkeit der verifizierten Produktidentifikationskennung gesteuert werden. Vorzugsweise wird auch das Verhältnis zwischen dem Volumenstrom des Verdünnungsmittels und dem Volumenstrom der Druckluft in Abhängigkeit der verifizierten Produktidentifikationskennung gesteuert. In die Produktidentifikationskennung sind insbesondere sämtliche Parameter und/oder durch den Dispenser einstellbare Variablen des Getränkeherstellungsprozesses eingebettet, so dass der Dispenser von der Kartusche sämtliche Informationen erhält, welche für die Herstellung des jeweiligen Getränks notwendig oder zumindest hilfreich sind. Denkbar ist auch, dass diese Informationen in einem internen Speicher der Dispensers abgelegt sind und mit Hilfe der Produktidentifikationskennung für die jeweilige Kartusche abgerufen und zur Steuerung des nachfolgenden Getränkeherstellungsverfahrens verwendet werden, sobald die Anwesenheit dieser Kartusche in der Kartuschenhalterung detektiert wird.

Noch ein Gegentand der vorliegenden Erfindung oder eine weitere bevorzugten Ausführungsform des Verfahrens ist ein oder das vorgenannte Verfahren zur Herstellung eines Getränks oder Lebensmittels, bei dem zur Beeinflussung des Schaums auf dem Getränk oder Lebensmittel der Volumenstrom eines Lösemittels, insbesondere Wasser, gesteuert oder geregelt wird.

Die zu diesem Gegenstand der vorliegenden Erfindung gemachten Ausführungen gelten für die anderen Gegenstände gleichermaßen und umgekehrt.

Erfindungsgemäß wird der Volumenstrom geregelt oder gesteuert, um den Schaum, auf dem Getränk oder Lebensmittel zu beeinflussen. Beispielsweise kann die Schaummenge, insbesondere gemessen als Schaumhöhe, so beeinflusst werden, dass während der Herstellung des Getränks oder Lebensmittels mehr oder weniger Schaum entsteht. Alternativ oder zusätzlich kann Qualität des Schaums durch die Regelung oder Steuerung des Volumenstroms des Lösemittels verändert werden. Insbesondere können im Mittel kleiner Bläschen und damit ein stabilerer Schaum oder im Mittel größere Bläschen und damit ein labilerer Schaum erzeugt werden.

Vorzugsweise ist ein Mittel vorgesehen, das zumindest einen Parameter des Schaums, beispielsweise dessen Höhe erfasst. Anhand des Signals dieses Mittels wird dann der Volumenstrom des Lösemittels geregelt oder gesteuert. Beispielsweise ist das Mittel eine Kamera. Alternativ oder zusätzlich kann aber auch ein für das jeweilige Substrat festgelegter Volumenstromverlauf gefahren werden.

Beispielsweise wird das Lösemittel intermittierend, insbesondere in eine Mischkammer oder die Kartusche selbst dosiert. In der Mischkammer bzw. in der Kartusche wird das Lösemittel mit dem Substrat gemischt.

Gemäß einer bevorzugten Ausführungsform der vorliegenden Erfindung wird das Substrat in der Kartusche proportional oder nicht-proportional zu dem Volumenstrom des Lösemittels dosiert wird.

Noch eine weitere erfindungsgemäße oder bevorzugte Ausführungsform der vorliegenden Erfindung betrifft ein Verfahren, bei dem zur Beeinflussung einer Schaumhöhe auf dem Getränk oder Lebensmittel die Neigung eines Behälters, in dem das Getränk oder Lebensmittel aufgefangen wird, verändert wird.

Die zu diesem Gegenstand der vorliegenden Erfindung gemachten Ausführungen gelten für die anderen Gegenstände der vorliegenden Erfindung gleichermaßen und umgekehrt.

Vorzugsweise wird die Neigung als Funktion der Zeit und/oder des Füllstands im Behälter gesteuert und/oder geregelt.

### Figurenbeschreibung

Im folgendem wird die Erfindung anhand der Figuren 1 bis 5 erläutert. Diese Erläuterungen sind lediglich beispielhaft und schränken den allgemeinen erfindungsgemäßen Gedanken nicht ein. Die Erläuterungen gelten für die erfindungsgemäße Kartusche und für das erfindungsgemäße System gleichermaßen.
- Figur 1: zeigt die Kartusche und die Kartuschenaufnahme des Systems gemäß einer ersten Ausführungsform der vorliegenden Erfindung
- Figuren 2 - 5: zeigen einen Dispenser und ein System gemäß der ersten Ausführungsform der vorliegenden Erfindung.
- Figuren 6a bis 6c: zeigen eine Kartusche eines Systems gemäß einer zweiten Ausführungsform der vorliegenden Erfindung.
- Figuren 7a und 7b: zeigen eine Kartuschenaufnahme des Systems gemäß der zweiten Ausführungsform der vorliegenden Erfindung.
- Figuren 8a und 8b: zeigen ein Aufstechmittel der Kartuschenaufnahme des Systems gemäß der zweiten Ausführungsform der vorliegenden Erfindung.
- Figuren 9a und 9b: zeigen ein Dispenser und ein System gemäß einer dritten Ausführungsform der vorliegenden Erfindung.

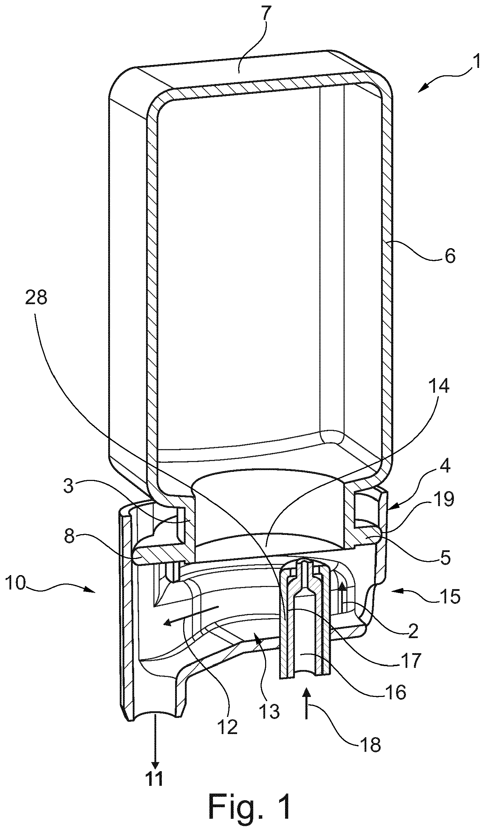

Figuren 1 zeigt ein Kartuschensystem, welches aus einer Kartusche 1 sowie einer Kartuschenaufnahme 10 besteht. Die Kartusche 1 wird vorzugsweise aus einem Kunststoffmaterial gefertigt, beispielsweise durch Spritzen oder Spritzgießen oder durch eine Blastechnik. Die Kartusche 1 weist einen, in dem vorliegenden Fall quadratischen, Wandbereich 6 auf, an dessen einem, hier oberen Ende sich ein Bodenbereich 7 anschließt. Der Wandbereich 6 und der Bodenbereich 7 begrenzen einen Hohlraum, in dem sich das Getränke- und/oder Lebensmittelsubstrat, insbesondere ein Konzentrat, befindet, mit dem ein Getränk oder Lebensmittel hergestellt werden kann. An dem dem Bodenbereich 7 gegenüberliegenden Ende, hier unteren Ende, des Wandbereiches 6 ist ein Verbindungsbereich 4 vorgesehen, der in dem vorliegenden Fall einen Hals 3 sowie einen Flansch 5 aufweist. Der Hohlraum der Kartusche 1 wird nach deren Befüllung durch einen Verschluss, hier eine Membran 14, hermetisch abgeschlossen. Die Membran 14, insbesondere eine Kunststofffolie wird vorzugsweise stoffschlüssig, insbesondere durch Siegeln mit dem Flansch 5 verbunden. Mit dem Verbindungsbereich 4 wird die Kartusche 1 mit einer Kartuschenaufnahme 10 verbunden. An dem Flansch 5 ist optional ein Positionier- und/oder Abdeckmittel 8 vorgesehen, das in dem vorliegenden Fall als Ausbuchtung, insbesondere als nasenförmige Ausbuchtung, vorgesehen ist. Die Nase ist hier einstückig an den Flansch 5 angeformt. Des Weiteren weist das Kartuschensystem eine Kartuschenaufnahme 10 auf. Die Kartuschenaufnahme 10 weist einen Zulauf 15 für ein Verdünnungsmittel (auch als Lösemittel bezeichnet), welches vorzugsweise Wasser umfasst, sowie eine Mischkammer 13 auf, in der das Verdünnungsmittel und das Getränke- und/oder Lebensmittelsubstrat miteinander gemischt werden. Die Strömungsrichtung des Gemisches ist durch den Pfeil 12 dargestellt. Das fertiggestellte Getränk/Lebensmittel verlässt die Mischkammer 13 durch den Ablauf 11 und wird in einem Behälter (nicht dargestellt), beispielsweise einem Trinkglas aufgefangen. Weiterhin weist die Kartuschenaufnahme 10 ein Aufstechmittel 16, hier einen Dorn, auf, der die Membran 14, die an den Flanschbereich 5 der Kartusche 1 gesiegelt ist, aufsticht, so dass das Getränke- oder Lebensmittelsubstrat insbesondere entlang der Außenfläche des Dorns, der dafür an seiner Außenseite vorzugsweise mit Seitenkanälen 17 versehen ist, in die Mischkammer 13 fließen kann.

Um die Membrane 14 zu durchstechen, werden die Kartusche 1 und/oder die Kartuschenaufnahme 10 relativ sowie längs zueinander verschoben, so dass der Dorn 16 die Membrane 14 durchdringt. Alternativ ist der Dorn 16 längsverschiebbar in einer Dornführung 28 der Kartuschenaufnahme 10 gelagert, so dass keine Relativbewegung zwischen der Kartuschenaufnahme 10 und der Kartusche 1 notwendig ist, sondern nur der Dorn 16 von einer eingefahrenen Position, in welcher er von der Membran 14 beabstandet ist (siehe Figur 1), in eine ausgefahrene Position, in welcher er die Membran 14 durchsticht und bis in den Hohlraum ragt, überführt wird.

Der Fluss des Substrates in die Mischkammer 13 kann durch Gas, das durch einen Kanal 18 in dem Aufstechdorn 16 in den Hohlraum der Kartusche 1 gedrückt wird, beschleunigt und gezielt gesteuert werden. Beispielsweise kann der Druck in der Kartusche 1 und damit der Volumenstrom des Substrates dem Volumenstrom des Lösemittels angepasst werden. Dies kann insbesondere dann von Interesse sein, wenn zur Beeinflussung der Schaumbildung der Volumenstrom des Lösungsmittels gezielt gesteuert oder geregelt wird. Der Volumenstrom des Substrats wird dann vorzugsweise an den Volumenstrom des Lösemittels angepasst.

Vorzugsweise wirkt der Flansch 5 der Kartusche 1 dichtend mit der Kartuschenaufnahme 10 zusammen und stellt dadurch sicher, dass Flüssigkeit die Mischkammer 13 nur durch den Ablauf 5 verlässt. Des Weiteren kann insbesondere diesen Figuren entnommen werden, dass die Ausbuchtung 8 in dem vorliegenden Fall nicht nur ein Positioniermittel ist, sondern auch den Ablauf 11 in der Kartuschenaufnahme insbesondere dichtend abdeckt. Der Flansch 8 und die daran vorgesehene Ausbuchtung 8 können mit ihrer Stirnfläche und/oder mit ihrem Umfang dichtend mit entsprechenden Flächen der Kartuschenaufnahme zusammenwirken.

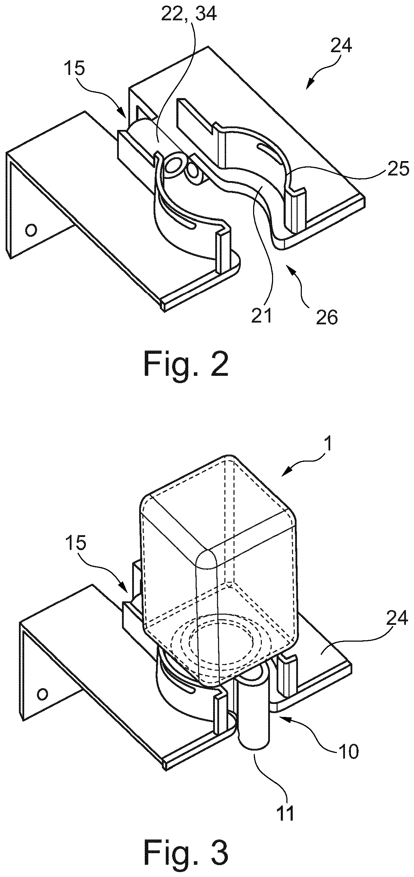

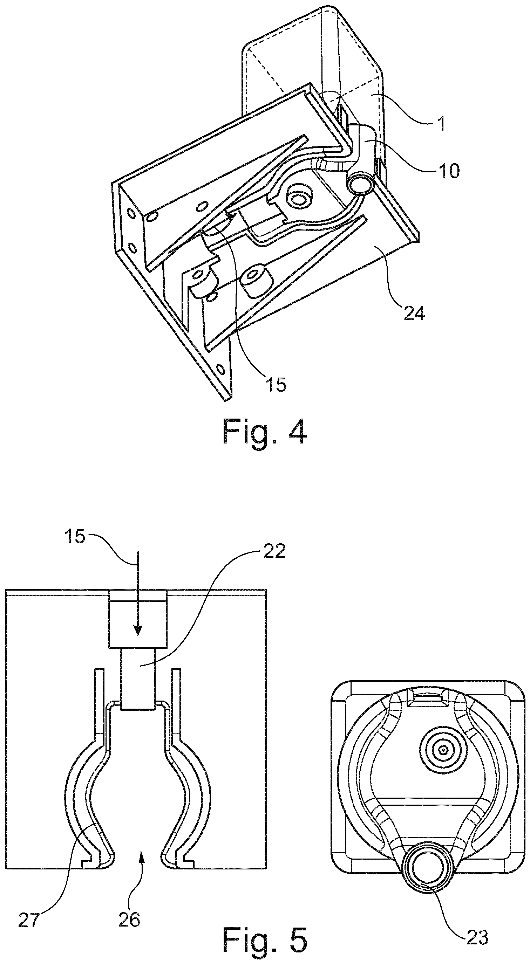

In Figuren 2 bis 5 ist die Kartuschenhalterung 24 des Dispensers und das System gemäß der ersten Ausführungsform gezeigt. In Figur 2 ist die Kartuschenhalterung 24, in welche das in Figur 1 gezeigte Kartuschensystem und insbesondere die Kartuschenaufnahme 10 des Kartuschensystems einsetzbar ist, ohne das Kartuschensystem illustriert. In Figuren 3 und 4 ist das Kartuschensystem in die Kartuschenhalterung 24 eingesetzt. In Figur 5 sind das Kartuschensystem und die Kartuschenhalterung 24 separat voneinander dargestellt.

Die Kartuschenhalterung 24 weist eine Ausnehmung 26 auf, die die Kartuschenaufnahme 10 zumindest teilweise aufnimmt. Insbesondere anhand von Figur 4 ist zu erkennen, dass der Teil der Kartuschenaufnahme 10, der in die Ausnehmung 26 hineinreicht, mit dieser formschlüssig zusammenwirken kann. Die Figuren 2 und 3 verdeutlichen darüber hinaus besonders deutlich, dass sich die Ausnehmung 26 bis zum Rand der Kartuschenhalterung 24 erstreckt, so dass dort eine Öffnung entsteht, in die der Ablauf 11 der Mischkammer 13 hineinragt. Hierdurch ist eine erste Verdrehsicherung gegeben. Des Weiteren kann die Kartuschenhalterung 24 eine Führung 25 aufweisen, die die mit dem Umfang der Kartuschenaufnahme 10 formschlüssig zusammenwirkt und die Kartusche insbesondere gegen Kippen aus der Vertikalen stützt. Auch diese Führung 25 kann eine Ausnehmung aufweisen, aus der der Ablauf 11 herausragen kann. Auch hier verhindert der Ablauf 11 im Zusammenspiel mit der Führung, dass sich die Kartuschenaufnahme 10 relativ zu der Kartuschenhalterung 24 dreht. Vorzugsweise weist die Kartuschenhalterung 24 eine Leitung 22 als Flüssigkeitsanschluss auf, die mit einem Lösemittelreservoir (auch als Reservoir für das Verdünnungsmittel oder Fluidquelle bezeichnet) verbunden ist. Wenn die Kartuschenaufnahme 10 in die Kartuschenhalterung 24 eingesetzt wird, wird eine Fluidverbindung zwischen der Leitung 22 und einem Zulauf 15 der Kartuschenaufnahme 10 erzeugt, wodurch das über die Leitung 22 einströmende Verdünnungsmittel in die Mischkammer 13 gelangt.

Der Ablauf 11 der Kartuschenaufnahme 10 kann schwenkbar vorgesehen sein, insbesondere um den Winkel, mit dem der Strahl des fertiggestellten Getränks oder Lebensmittels in das Gefäß strömt zu verändern. Wird der Strahl beispielsweise in Richtung der Wandung eines Behälters geleitet, der das fertiggestellte Getränk oder Lebensmittel aufnimmt, kann dadurch beispielsweise eine Schaumbildung reduziert werden. Alternativ oder zusätzlich kann eine Auflage, auf der der Behälter steht, gekippt werden, so dass sich wiederum der Auftreffwinkel des Strahls des fertiggestellten Getränks oder Lebensmittels relativ zu Wandung verändert. Auch damit kann die Schaumbildung beeinflusst werden.

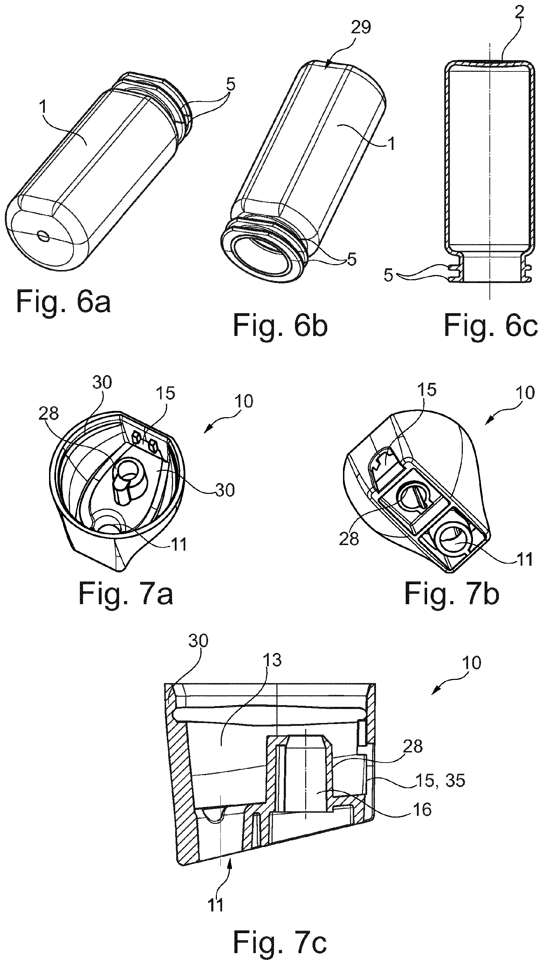

In den Figuren 6a bis 6c sind schematische Ansichten der Kartusche 1 des Kartuschensystems des Systems gemäß einer beispielhaften zweiten Ausführungsform gezeigt. Es ist zu sehen, dass die Kartusche 2 ein flaschenförmiges Objekt mit abgerundeten Kanten, abgeflachten Längsseiten und einer Kartuschenöffnung auf einer dem Bodenbereich 7 entlang der Längsachse der Kartusche 1 gegenüberliegenden Seite umfasst. Im Bereich der Kartuschenöffnung weist die Kartusche 1 zwei umlaufende Halteflansche 5 auf, auf welche die Kartuschenaufnahme 10 aufgeclipst wird. Eine Seite der Kartusche 1 der ansonsnte runden oder abgerundenen Kartusche 1 weist einen abgeflachten Bereich 29 auf. In den abgeflachten Bereich wird vorzugsweise die Produktidentifikationskennung aufgebracht.

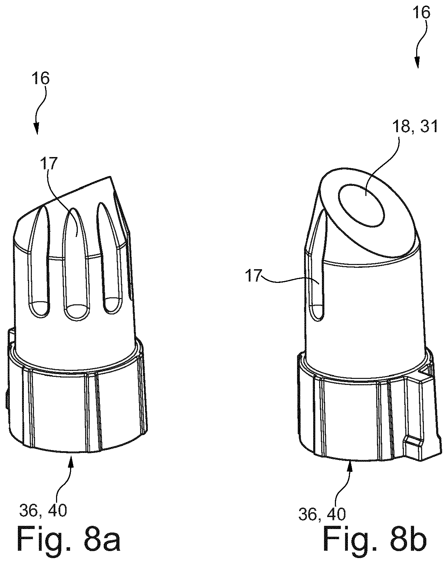

Die Figuren 7a, 7b und 7c zeigen schematische Ansichten einer Kartuschenaufnahme 10 des Kartuschensystems des Systems der beispielhaften zweiten Ausführungsform der vorliegenden Erfindung. Die Kartuschenaufnahme 10 weist beidseitig eine zumindest teilweise umlaufende Rastleiste 30 auf, mit welcher die Kartuschenaufname 10 auf die Halteflansche 5 der Kartusche 1 aufgeclipst wird. Ferner weist die Kartuschenaufnahme 10 die Mischkammer 13 auf, in welche an ihrer rückwärtigen Seite der Zulauf 15 in Form einer einfachen Durchgangsöffnung in der Wandung der Kartuschenaufnahme 10 ausgebildet ist. Der Zulauf 15 ist dazu vorgesehen, mit einer Leitung 22, welche in Fluidverbindung mit dem Wasserreservoir steht, verbunden zu werden, sobald das Kartuschensystem in die Kartuschenhalterung 24 eingesetzt wird. Auf diese Weise kann optional gekühltes und/oder carbonisiertes Wasser von dem Dispenser in die Mischkammer 13 strömen. An der Vorderseite ist im Boden der Mischkammer 8 der Getränkeablauf 11 ausgebildet. Der Boden der Mischkammer 8 bildet in Richtung des Getränkeablaufs 11 eine sich stetig vertiefende Vertiefung, so dass nach Beendigung des Getränkeherstellungsprozesses keine Flüssigkeitsrückstände in der Mischkammer 13 verbleiben. Nahezu mittig innerhalb der Mischkammer 13 ist in den Figuren 7a bis 7c zudem die Dornführung 28 zu sehen, in welcher das in Figuren 8a und 8b illustrierte Aufstechmittel 16 verschiebbar gelagert ist.

Die Dornführung 80 umfasst hierfür ein Führungsteil mit einem innenliegenden Führungskanal, in welchem der Aufstechdorn verschiebbar aufgenommen ist. Der Führungskanal ist im Wesentlichen zylinderförmig ausgebildet ist und steht nahezu senkrecht vom Boden der Mischkammer 13 in Richtung der Kartusche 1 hervor. An einem der Kartusche 1 zugewandten Ende des Führungsteils ist ein umlaufender Anschlag mit verringertem Durchmesser ausgebildet, an welchem ein umlaufende Absatz des Aufstechdorns anschlägt, wenn der Aufstechdorn 16 in der ausgefahrenen Position ankommt. Der Anschlag begrenzt somit die Bewegung des Aufstechdorns 16 in Richtung des Hohlrausm6. Auf dem Boden der Mischkammer 13 sind optional Mischstrukturen angeordnet, welche eine Verwirbelung des einströmenden Wassers verursachen und somit die Vermischung des Substrats und des Wassers verbessern.

In **Figuren 8a und 8b** sind Detailansichten des Aufstechmittels 16 (auch als Aufstechdorn bezeichnet) der Kartuschenaufnahme 10 des Systems gemäß der zweiten beispielhaften Ausführungsform der vorliegenden Erfindung dargestellt.

Der Aufstechdorn 16 ist dazu ausgebildet, längsverschieblich in der Dornführung 28 angeordnet zu sein. Er ist somit von einer eingefahrenen Ausgangsposition, in welcher das Aufstechmittel 16 von der Membran 14 beabstandet ist, in eine ausgefahrene Position, in welcher das Aufstechmittel 16 die Membran 14 durchsticht und bis in den Hohlraum der Kartusche 1 ragt, überführbar. Die Überführung des Aufstechmittels 16 von der eingefahrenen Position in die ausgefahrene Position erfolgt mittels eines Auslöseelements des Dispensers.

In den Aufstechdorn 16 ist die entlang des Aufstechdorns 16 verlaufende Druckluftleitung 31 (auch als Kanal 22 bezeichnet) integriert. Die Druckluftleitung 31 verläuft nahezu mittig innerhalb des Aufstechdorns 16 von einem ersten Ende des Aufstechdorns 16 zu einem zweiten Ende des Aufstechdorns 16. Am ersten Ende des Aufstechdorns 16 ist ein von außerhalb der Kartuschenaufnahme 10 zugänglicher Druckluftanschluss 40 der Druckluftleitung 31 ausgebildet, der zur Verbindung mit einem mit einer Druckluftquelle des Dispensers in Fluidverbindung stehenden Druckluftauslass 32 an der Kartuschenhalterung 24 vorgesehen ist. Am zweiten Ende ist ein Druckluftausgang der Druckluftleitung 31 zum Einblasen der Druckluft in den Hohlraum der Kartusche 1 ausgebildet, wenn sich der Aufstechdorn 16 in der ausgefahrenen Position befindet, wodurch dann das Substrat in die Mischkammer 13 gedrückt wird.

Das System ist so ausgebildet ist, dass eine Kopplung des Druckluftanschlusses 40 des Aufstechmittels 16 mit dem Druckluftauslass 32 der Kartuschenhalterung 24 sofort erfolgt, sobald die Kartuschenaufnahme 10 in die Kartuschenhalterung 24 eingesetzt ist und/oder eine Auslösemechanik für den Befestigungsflansch betätigt wird.

Die Außenwandung des Aufstechmittels 16 ist mit mehreren und insbesondere genau fünf nahezu parallel zueinander verlaufenden Seitenkanälen 17 zum Leiten des Substrats in Richtung der Mischkammer 13 ausgebildet, wenn die Membran 14 durchstochen ist. Durch die seitlich am Aufstechmittel 16 ausgebildeten Seitenkanäle kann das Substrat dann an der Membran 14 vorbei in Richtung Mischkammer 13 fließen. Die Seitenkanäle 17 sind jeweils in Form einer einseitig offenen Nut ausgebildet. Denkbar ist, dass der Querschnitt der Seitenkanäle und/oder die Anzahl der Seitenkanäle an die Viskosität des Substrats angepasst ist, so dass die Seitenkanäle 17 den Fluss des Substrats in Richtung Mischkammer 13 kontrollieren bzw. begrenzen. Der Aufstechdorn 16 ist vorzugsweise als Kunststoffteil und besonders bevorzugt als Kunststoff-Spritzgussteil ausgebildet.

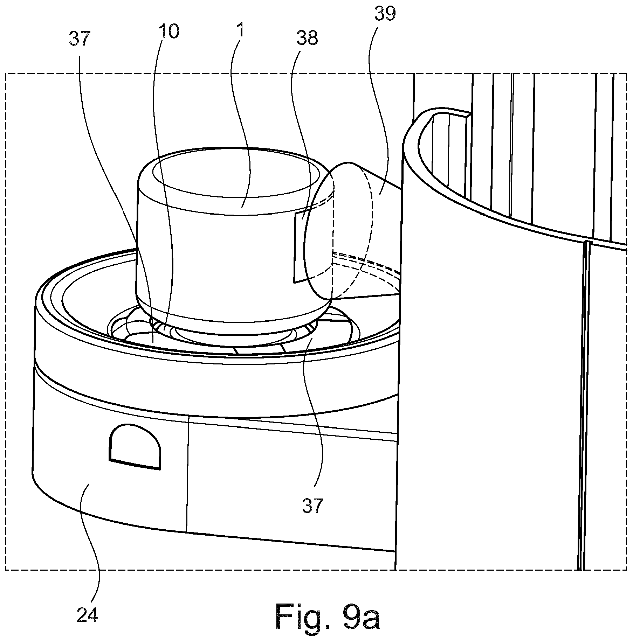

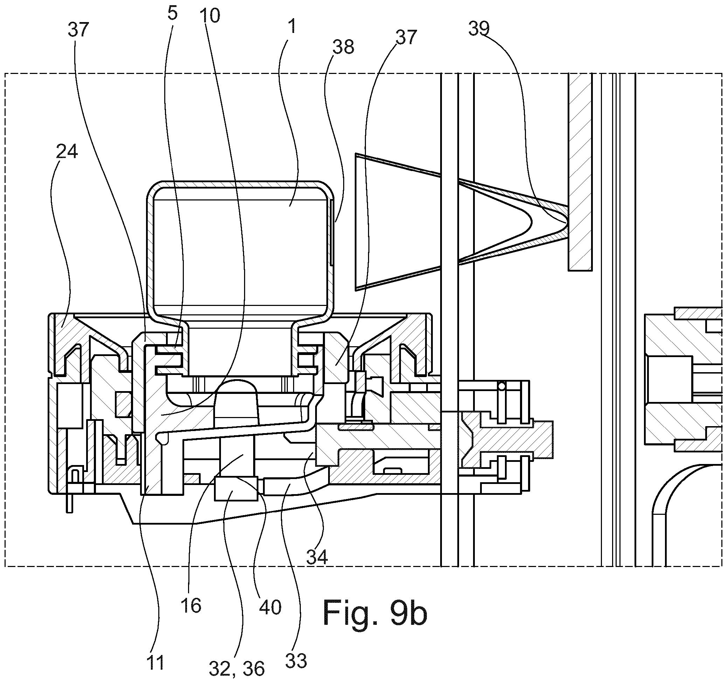

In Figuren 9a und 9b ist nun ein Dispenser und ein System gemäß einer dritten Ausführungsform der vorliegenden Erfindung dargestellt.

Das System umfasst ein Kartuschensystem bestehend aus der anhand von Figuren 6a bis 6c erläuterten Kartusche 1 und der anhand von Figuren 7a bis 8b erläuterten Kartuschenaufnahme 10. Kartusche 1 und Kartuschenaufnahme 10 sind miteinander verbunden, insbesondere verclipst.

Der Dispenser des Systems umfasst eine Kartuschenhalterung 24, in welche das Kartuschensystem durch den Benutzer manuell eingesetzt wird.

Die Kartuschenhalterung 24 umfasst den Druckluftauslass 32, welcher nach dem Einsetzen des Kartuschensystems in die Kartuschenhalterung 24, eine Fluidverbindung mit dem Druckluftanschluss 40 am Aufstechmittel 16 der Kartuschenaufnahme 10 eingeht. Der Druckluftauslass 32 des Dispensers ist über eine flexible Leitung 33 mit einer Druckluftquelle des Dispensers, beispielsweise einem Kompressor im Inneren des Gehäuses des Dispensers verbunden, so dass die Druckluftleitung 31 im Inneren des Aufstechmittels 16 unter Druck gesetzt wird. Denkbar ist auch, dass die Druckluftquelle des Dispensers eine austauschbare Gaskartusche umfasst. Der Druckluftauslass 32 ist als feststehendes Element ausgebildet und umfasst somit gleichzeitig das Auslöseelement, welches das Aufstechmittel 16 von seiner eingefahrenen Ausgangsposition in die ausgefahrene Position, in welcher es die Membran 14 durchsticht und der Druckluftausgang innerhalb der Hohlraums der Kartusche 1 angeordnet ist, überführt.

Die Kartuschenhalterung 24 weist ferner den Flüssigkeitsanschluss 35 (in Figur 2 auch als Leitung 22 bezeichnet) auf, durch welche dem Wasserzulauf 15 der Kartuschenaufnahme 10 Wasser aus einem Wasserreservoir des Dispensers zugeführt wird. Das Wasserreservoir umfasst insbesondere einen herausnehmbaren Wassertank, aus welchem Wasser mittels einer oder mehrerer Pumpen entnommen und dem Wasserzulauf 15 unter Druck zugeführt wird. Vorzugsweise wird die Verbindung zwischen der Fluidzuführung und dem Wasserzulauf 15 direkt hergestellt, sobald das Kartuschensystem in die Kartuschenhalterung 24 eingesetzt wird. Das Wasser aus dem Wassertank wird vor der Zuführung zum Wasserzulauf 15 optional noch innerhalb des Dispensers mittels eines Carbonisierers carbonisiert (also Kohlensäure zugesetzt wird) und/oder mittels einer Kühleinheit gekühlt wird. Die Kühleinheit umfasst insbesondere einen Kühlkreislauf mit Kompressor und ist, wie auch der Carbonisierer, ebenfalls in das Gehäuse des Dispensers integriert.

Die Kartuschenhalterung 24 umfasst ferner einen Befestigungsflansch 34, welcher die Kartuschenaufnahme 10 beim Einsetzen in die Halter formschlüssig und/oder kraftschlüssig umgreift. Der Befestigungsflansch 34 umfasst hierfür wenigstens zwei Klauen 37, welche die Kartuschenaufnahme 10 radial umgreifen. Die Kartuschenhalterung 24 weist zudem eine Auslösemechanik zur Betätigung des Befestigungsflansches 34 auf. Die Auslösemechanik umfasst beispielsweise einen manuell durch den Benutzer zu betätigen Handhebel an der Kartuschenhalterung 24, welcher bei seiner Betätigung um eine zu Längsachse der Kartusche 2 im Wesentlichen parallele Drehachse verschwenkbar ist. Der Handhebel ist über ein Übersetzungsgetriebe mit den Klauen 37 des Befestigungsflansches 34 derart gekoppelt, dass durch die Verschenkung des Handhebels die Klauen 37 aufeinander zu bewegt werden und die Kartuschenaufnahme 10 zwischen sich formschlüssig aufnehmen oder einklemmen.

Gleichzeitig bewirkt das Übersetzungsgetriebe eine Übersetzung der Drehbewegung des Handhebels in eine lineare Translationsbewegung des Befestigungsflansches 34 nach unten, so dass das gesamte Kartuschensystem abgesenkt wird. Die Kartuschenaufnahme 10 wird somit relativ zu dem feststehenden Auslöseelement 36 derart bewegt, dass das Aufstechmittel 16 an dem Auslöseelement 36 anschlägt, wodurch sich das Aufstechmittel 16 von der eingefahrenen Position in die ausgefahrene Position bewegt. Hierdurch wird die Membran 14 perforiert. Denkbar ist auch, dass durch das Absenken der Kartuschenaufnahme 10 relativ zum Auslöseelement 36 erst die Fluidverbindung zwischen dem Druckluftauslass 32 und dem Druckluftanschluss 40 hergestellt wird. Das Übersetzungsgetriebe erzeugt die Übersetzung und Absenkbewegung durch ein Spindelhubgetriebe.

Durch Einleiten der Druckluft in den Hohlraum und des Wassers in die Mischkammer 13 wird nun der Getränkeherstellungsprozess eingeleitet und das in der Mischkammer 14 erzeugte Getränke kann durch den Ablauf 11 in ein unterhalb des Ablaufs 11 auf einer Auflage des Dispensers angeordnetem Trinkgefäß gelangen. Die Auflage ist insbesondere schwenkbar und/oder höhenverstellbar vorgesehen.

Die Kartusche 1 weist in ihrem dem Gehäuse des Dispensers zugewandten abgeflachten Bereich 28 die Produktidentifikationskennung 38 auf. Die Produktidentifikationskennung 38 umfasst dabei einen QR-Code, in welchen Informationen über das in dem Hohlraum vorhandene Substrat eingebettet sind. An der gegenüberliegenden Seite ist am Gehäuse des Dispensers ein Kennungsdetektor 39 in Form einer optischen Kamera, insbesondere CCD-Kamera angeordnet. Der QR-Code wird von der optischen Kamera erfasst und mittels einer Auswerteeinheit des Dispensers ausgewertet. Auf diese Weise wird seitens des Dispensers erkannt, um welche Art von Kartusche 1 und/oder Substrat es sich bei dem in die Kartuschenhalterung 24 eingesetzten Kartuschensystem handelt. Anhand dieser Informationen können aus einem internen Speicher des Dispensers ggf. Informationen über die Zubereitung des Getränks mit Hilfe des in der Kartusche 1 befindlichen Substrats geladen werden. Insbesondere werden hierdurch Sollwerte für den zeitlichen und absoluten Verlauf des Volumenstroms, der Temperatur, des Drucks und/oder der Carbonisierung des eingespeisten Wassers oder des zeitlichen und absoluten Verlaufs des Volumenstroms und/oder des Drucks der eingespeisten Druckluft vorgegeben. Denkbar ist auch, dass das Verhältnis zwischen dem Volumenstrom des Verdünnungsmittels und dem Volumenstrom der Druckluft in Abhängigkeit der verifizierten Produktidentifikationskennung gesteuert wird, um beim hergestellten Getränk für den jeweiligen Kartuschentyp das optimale Ergebnis hinsichtlich Aussehen und Geschmack zu erzielen.

Nach der Herstellung des Getränks kann der Handhebel von dem Benutzer zurück verschwenkt werden, wodurch sich das Kartuschensystem wieder anhebt. Das somit freigegebene Kartuschensystem kann nun von dem Dispenser entnommen und entsorgt bzw. recycled werden.

Nachfolgend werden mögliche Ausführungsformen des erfindungsgemäßen Systems, der erfindungsgemäßen Kartusche, der erfindungsgemäßen Getränkezubereitungseinheit sowie des erfindungsgemäßen Verfahrens zur Herstellung eines Getränks beschrieben.

Ausführungsform 1 betrifft einen Dispenser mit einer Kartuschenhalterung 24, wobei sie mindestens eine Führung und/oder Verdrehsicherung 25, 27 für eine Kartusche 1 und/oder eine Kartuschenaufnahme 10 aufweist.

Ausführungsform 2 betrifft einen Dispenser nach Ausführungsform 1, wobei die Kartuschenhalterung 24 eine Ausnehmung 26 aufweist, die die Kartusche 1 und/oder die Kartuschenaufnahme 10 zumindest teilweise aufnimmt.

Ausführungsform 3 betrifft einen Dispenser nach Ausführungsform 2, wobei die Ausnehmung 26 und die Kartusche 1 oder Kartuschenaufnahme 10 zumindest teilweise formschlüssig zusammenwirken.

Ausführungsform 4 betrifft einen Dispenser nach einer der voranstehenden Ausführungsformen, wobei die Halterung 24 eine Führung 25 aufweist, die mit dem Umfang der Kartuschenaufnahme 10 zusammenwirkt.

Ausführungsform 5 betrifft einen Dispenser nach einer der Ausführungsformen 2 - 4, wobei die Ausnehmung 26 und/oder die Führung 25 eine Öffnung für einen Vorsprung an der Kartuschenaufnahme 10 aufweisen.

Ausführungsform 6 betrifft einen Dispenser nach einer der voranstehenden Ausführungsformen, wobei die Halterung 24 einen Flüssigkeitsanschluss 35 aufweist.

Ausführungsform 7 betrifft einen Dispenser nach einer der voranstehenden Ausführungsformen, wobei die Halterung 24 einen mit einer Druckluftquelle verbundenen Druckluftauslass 32 aufweist.

Ausführungsform 8 betrifft einen Dispenser nach einer der voranstehenden Ausführungsformen, wobei die Halterung 24 ein Auslöseelement 36 aufweist, um ein Aufstechmittel 16 der Kartuschenaufnahme 10 von einer eingefahrenen Position in eine ausgefahrene Position zu überführen.

Ausführungsform 9 betrifft einen Dispenser nach einer der vorherigen Ausführungsformen, wobei die Halterung 24 einen Befestigungsflansch 34 umfasst, welcher die Kartuschenaufnahme 10 beim oder nach dem Einsetzen in die Halterung 24 formschlüssig und/oder kraftschlüssig umgreift.

Ausführungsform 10 betrifft einen Dispenser nach Ausführungsform 9, wobei der Befestigungsflansch 34 eine Auslösemechanik umfasst, die derart konfiguriert ist, dass eine Betätigung der Auslösemechanik zu einem Umgreifen der Kartuschenaufnahme 10 durch den Befestigungsflansch 34 und/oder zu einem Verschieben des Befestigungsflansches 34 derart, dass eine Relativbewegung zwischen Kartuschenaufnahme 10 und dem in Kontakt mit dem Aufstechmittel 16 stehenden Auslöseelement 36 erzeugt wird, wodurch das Aufstechmittel 16 von der eingefahrenen Position in die ausgefahrene Position überführt wird, führt.

Ausführungsform 11 betrifft einen Dispenser nach Ausführungsform 10, wobei die Auslösemechanik einen Handhebel zur manuellen Betätigung derselben umfasst, wobei vorzugsweise der Handhebel um eine zur Längsachse der Kartusche 1 im Wesentlichen parallele Drehachse drehbar ausgebildet ist.

Ausführungsform 12 betrifft einen Dispenser nach Ausführungsform 11, wobei die Auslösemechanik ein Übersetzungsgetriebe umfasst, welche eine Drehbewegung des Handhebels um die zur Längsachse parallele Drehachse in eine zur Längsachse im Wesentlichen parallele Translationsbewegung und insbesondere in ein Anheben oder Absenken der Kartuschenaufnahme 10 übersetzt.

Ausführungsform 13 betrifft einen Dispenser nach einer der vorhergehenden Ausführungsformen, wobei der Dispenser einen Kennungsdetektor 39 zum Auslesen einer Produktidentifikationskennung 38 auf der Kartusche 1 und/oder der Kartuschenaufnahme 10 aufweist, wobei der Kennungsdetektor 39 vorzugsweise oberhalb und/oder hinter der Halterung 24 angeordnet ist.

Ausführungsform 14 betrifft einen Dispenser nach einer der voranstehenden Ausführungsformen, wobei der Dispenser eine Auflage für einen Behälter aufweist, im dem das fertiggestellte Getränk oder Lebensmittel aufgefangen wird, wobei die Auflage schwenkbar und/oder höhenverstellbar vorgesehen ist.

Ausführungsform 15 betrifft ein System aufweisend einen Dispenser nach einer der voranstehenden Ausführungsformen und eine Kartuschenaufnahme 10 und/oder eine Kartusche 1.

Ausführungsform 16 betrifft ein System nach Ausführungsform 15, wobei die Kartuschenaufnahme 10 einen Zulauf 15 für ein Verdünnungsmittel, insbesondere Wasser, eine Mischkammer 13, in der das Verdünnungsmittel und ein Getränke- und/oder Lebensmittelsubstrat gemischt werden, und einem Ablauf 11 aufweist, wobei sich bezogen auf die Strömungsrichtung des Verdünnungsmittels der Strömungsquerschnitt vorzugsweise zunächst erweitert und dann wieder vermindert.

Ausführungsform 17 betrifft ein System nach einer der Ausführungsformen 15 oder 16, wobei die Mischkammer 13 eine Ausbuchtung aufweist.

Ausführungsform 18 betrifft ein System nach Ausführungsform 17, wobei der Ablauf 11 in der Ausbuchtung vorgesehen ist.

Ausführungsform 19 betrifft ein System nach einer der Ausführungsformen 15 - 18, wobei die Kartusche 1 mittels einer Membran 14 verschlossen ist und dass die Kartuschenaufnahme 10 ein Aufstechmittel 16 zum Perforieren der Membran 14 aufweist.

Ausführungsform 20 betrifft ein System nach Ausführungsform 19, wobei die Kartuschenaufnahme 10 eine Dornführung 28 aufweist, in welcher das Aufstechmittel 16 verschiebbar gelagert ist, wobei das Aufstechmittel 16 zwischen einer eingefahrenen Position, in welcher das Aufstechmittel 16 von der Membran 14 beabstandet ist, und einer ausgefahrenen Position, in welcher das Aufstechmittel 16 die Membran 14 der Kartusche 1 durchsticht und bis in die Kartusche 1 ragt, verschiebbar ist.

Ausführungsform 21 betrifft ein System nach Ausführungsform 20, wobei in die Außenwandung des Aufstechmittels 16 wenigstens ein Seitenkanal 71 zum Leiten des Getränke- und/oder Lebensmittelsubstrats in Richtung der Mischkammer 13, wenn die Membran 14 von dem Aufstechmittel 16 durchstochen ist, eingebracht ist.

Ausführungsform 22 betrifft ein System nach einer der Ausführungsformen 19 bis 21, wobei in das Aufstechmittel 16 eine Druckluftleitung 31 integriert ist und wobei an einer der Kartusche 1 abgewandten Seite des Aufstechmittels 16 ein, insbesondere von außerhalb der Kartuschenaufnahme 10 zugänglicher Druckluftanschluss 40 der Druckluftleitung 31 zur Verbindung mit einer Druckluftquelle ausgebildet ist und wobei an einer der Kartusche 1 zugewandten Seite des Aufstechmittels 16 ein Druckluftausgang der Druckluftleitung 34 zum Einblasen der Druckluft in die Kartusche 1 ausgebildet ist.

Ausführungsform 23 betrifft ein System nach Ausführungsform 22, wobei das System derart ausgebildet ist, dass eine Kopplung des Druckluftanschlusses 40 mit dem Druckluftauslass der Halterung erfolgt, wenn die Kartuschenaufnahme 10 in die Halterung eingesetzt ist und/oder die Auslösemechanik für den Befestigungsflansch betätigt wird.

Ausführungsform 24 betrifft ein System nach einer der Ausführungsformen 15 - 23, wobei der Zulauf 15 und der Ablauf 11 an gegenüberliegenden Enden der Kartuschenaufnahme 10 vorgesehen sind.

Ausführungsform 25 betrifft ein System nach einer der Ausführungsformen 15 - 24, wobei das Aufstechmittel 16 in einer Flucht mit dem Zulauf 15 und dem Ablauf 11 vorgesehen ist.

Ausführungsform 26 betrifft ein System nach einer der Ausführungsformen 15 - 25, wobei an oder in der Kartuschenaufnahme 10 eine Kartusche 1 vorgesehen ist, die einen Wandbereich 6 aufweist, an dessen einem Ende sich ein Verbindungsbereich 4 anschließt, der, insbesondere mit der Membran 14, verschlossen ist und an dessen gegenüberliegendem Ende gegebenenfalls ein Bodenbereich 7 vorgesehen ist, wobei der Wandbereich und gegebenenfalls der Bodenbereich einen Hohlraum aufspannen, der ein Getränke- und/oder Lebensmittelsubstrat aufnimmt.

Ausführungsform 27 betrifft ein System nach Ausführungsform 26, wobei der Verbindungsbereich 4 wenigstens einen Flansch 5 aufweist, der mit einem Positioniermittel und/oder Abdeckmittel 8 versehen ist.

Ausführungsform 28 betrifft ein System nach Ausführungsform 27, wobei das Positioniermittel und/oder Abdeckmittel 8 eine Ein- und/oder Ausbuchtung ist, die aus dem Flansch, insbesondere dessen Umfang, hervorsteht.

Ausführungsform 29 betrifft ein System nach einer der Ausführungsformen 26 - 29, wobei zwischen dem Wandbereich 6 und dem Verbindungsbereich 4 ein Hals 3 vorgesehen ist.

Ausführungsform 30 betrifft ein System nach einer der Ausführungsformen 26 - 29, wobei die Membran 14 an dem Flansch befestigt, insbesondere angesiegelt ist.

Ausführungsform 31 betrifft ein System nach einer der Ausführungsformen 26 - 30, wobei die Kartuschenaufnahme 10 an dem Verbindungsbereich 4 der Kartusche 1 insbesondere lösbar befestigt ist.

Ausführungsform 32 betrifft ein System nach einer der voranstehenden Ausführungsformen 26 - 31, wobei der Flansch dichtend mit der Kartuschenaufnahme 10 zusammenwirkt.

Ausführungsform 33 betrifft ein System nach einer der Ausführungsformen 26 - 32, wobei die Kartusche 1 und die Kartuschenaufnahme 10 drehfest miteinander verbunden sind.

Ausführungsform 34 betrifft ein System nach einer der Ausführungsformen 27 - 33, wobei das Abdeckmittel 8 den Ablauf 11 der Kartuschenaufnahme 10 abdeckt.

Ausführungsform 35 betrifft ein System nach einer der Ausführungsformen 15 bis 34, wobei die Kartusche 1 mit einer Produktidentifikationskennung versehen ist, wobei die Produktidentifikationskennung bevorzugt auf einer dem Kennungsdetektor zugewandten Seite der Kartusche angeordnet ist und wobei besonders bevorzugt die Kartusche im Bereich der Produktidentifikationskennung einen im Wesentlichen ebenen Oberflächenabschnitt aufweist.

Ausführungsform 36 betrifft ein Verfahren zur Herstellung eines Getränks 70 mit einem System nach einer der Ausführungsformen 15 bis 35, gekennzeichnet durch die folgenden Schritte:
Einsetzen eines aus Kartusche 1 und Kartuschenaufnahme 10 zusammengesetzten Kartuschensystems in die Halterung,
Herstellen einer Fluidverbindung zwischen einer Fluidquelle des Dispensers und dem Zulauf 15 der Kartuschenaufnahme 10,
Herstellen einer Druckluftverbindung zwischen einer Druckluftquelle des Dispensers und einem Druckluftanschluss 40 der Kartuschenaufnahme 10,
Perforieren der Membran 14 durch Überführen des Aufstechmittels 16 von der eingefahrenen Position in die ausgefahrene Position,
Überführen des Getränke- und/oder Lebensmittelsubstrats von der Kartusche 1 in die Mischkammer 13 durch Einspeisen von Druckluft in die Kartusche 1 durch den Druckluftanschluss 40,
Einspeisen eines Verdünnungsmittels in die Mischkammer 13 durch den Zulauf 15 und Ableiten des in der Mischkammer 13 durch Vermischung des Getränke- und/oder Lebensmittelsubstrats mit dem Verdünnungsmittel erzeugten Getränks mittels des Ablaufs 11.

Ausführungsform 37 betrifft ein Verfahren nach Ausführungsform 36, wobei das Verdünnungsmittel vor dem Einspeisen in den Zulauf 15 gekühlt und/oder karbonisiert wird.

Ausführungsform 38 betrifft ein Verfahren nach einer der Ausführungsformen 36 oder 37, wobei das Aufstechmittel 16 von einem Auslöseelement des Dispensers von der eingefahrenen Position in die ausgefahrene Position überführt wird, wobei die Kartuschenaufnahme 10 vorzugsweise derart gegen das feststehende Auslöseelement bewegt wird, dass das Aufstechmittel 16 von der eingefahrenen Position in die ausgefahrene Position überführt wird.

Ausführungsform 39 betrifft ein Verfahren nach Ausführungsform 38, wobei beim oder nach dem Einsetzen des Kartuschensystems 1 in die Halterung ein Befestigungsflansch der Halterung von einer manuell oder motorisch betätigbaren Auslösemechanik derart betrieben wird, dass die Kartuschenaufnahme 10 form- und/oder kraftschlüssig von dem Befestigungsflansch umgriffen wird und/oder dass der Befestigungsflansch derart verschoben wird, dass eine Relativbewegung zwischen der Kartuschenaufnahme 10 und dem in Kontakt mit dem Aufstechmittel stehenden Auslöseelement erzeugt wird, wodurch das Aufstechmittel von der eingefahrenen Position in die ausgefahrene Position überführt wird.

Ausführungsform 40 betrifft ein Verfahren nach Ausführungsform 39, wobei die Auslösemechanik durch ein manuelles Verschwenken eines Handhebels um eine zur Längsachse der Kartusche im Wesentlichen parallele Drehachse betätigt wird.

Ausführungsform 41 betrifft ein Verfahren nach Ausführungsform 40, wobei die Auslösemechanik mittels eines Übersetzungsgetriebes die Drehbewegung des Handhebels um die zur Längsachse parallele Drehachse in eine zur Längsachse im Wesentlichen parallele Translationsbewegung übersetzt, wodurch der Befestigungsflansch in Richtung des Auslöseelements bewegt wird.

Ausführungsform 42 betrifft ein Verfahren nach einer der Ausführungsformen 36 bis 41, wobei zur Beeinflussung des Schaums auf dem Getränk oder Lebensmittel der Volumenstrom des Verdünnungsmittels gesteuert oder geregelt wird.

Ausführungsform 43 betrifft ein Verfahren nach Ausführungsform 42, wobei das Lösemittel intermittierend dosiert wird.

Ausführungsform 44 betrifft ein Verfahren nach einer der Ausführungsformen 42 oder 43, wobei das Substrat in der Kartusche proportional oder nicht-proportional zu dem Volumenstrom des Lösemittels dosiert wird.

Ausführungsform 45 betrifft ein Verfahren nach einer der Ausführungsformen 42 - 44, dadurch gekennzeichnet, das zur Beeinflussung einer Schaumhöhe auf dem Getränk oder Lebensmittel die Neigung eines Behälters, in dem das Getränk oder Lebensmittel aufgefangen wird, verändert wird.

Ausführungsform 46 betrifft ein Verfahren nach Ausführungsform 45, wobei die Neigung als Funktion der Zeit und/oder des Füllstands im Behälter gesteuert und/oder geregelt wird.

Ausführungsform 47 betrifft ein Verfahren nach einer der Ausführungsformen 36 bis 46, wobei zeitlich vor, während oder nach dem Einsetzen des Kartuschensystems in die Halterung und/oder des Einspeisens von Druckluft in die Kartusche 1 und/oder des Einspeisens des Verdünnungsmittels in die Mischkammer 13 und/oder der Verschiebung des Befestigungsflansches gegenüber dem Auslöseelement die Produktidentifikationskennung von dem Kennungsdetektor ausgelesen wird.

Ausführungsform 48 betrifft ein Verfahren nach Ausführungsform 47, wobei die ausgelesene Produktidentifikationskennung von einer Auswerteeinheit ausgewertet wird und das Einspeisen der Druckluft und/oder des Verdünnungsmittels und/oder das Verschieben des Befestigungsflansches gegenüber dem Auslöseelement nur dann erfolgt, wenn die Produktidentifikationskennung von der Auswerteeinheit verifiziert werden kann.

Ausführungsform 49 betrifft ein Verfahren nach Ausführungsform 48, wobei die Eigenschaften des eingespeisten Verdünnungsmittels und insbesondere der zeitliche Verlauf des Volumenstroms, Gesamtvolumen, Druck, Förderpausen, Temperatur und/oder Carbonisierung des eingespeisten Verdünnungsmittels in Abhängigkeit der verifizierten Produktidentifikationskennung gesteuert werden.

Ausführungsform 50 betrifft ein Verfahren nach einer der Ausführungsformen 48 oder 49, wobei die Eigenschaften der eingespeisten Druckluft und insbesondere der zeitliche Verlauf des Volumenstroms, Gesamtvolumen, Förderpausen und/oder Druck der eingespeisten Druckluft in Abhängigkeit der verifizierten Produktidentifikationskennung gesteuert werden.

### Bezugszeichenliste

- 1: Kartusche
- 2: Bewegungsrichtung
- 3: Hals
- 4: Verbindungsbereich
- 5: Flansch
- 6: Wandbereich
- 7: Bodenbereich
- 8: Positionier- und/oder Abdeckmittel, Ein- und/oder Ausbuchtung,
- 9: Zulauf der Substanz, Aufstechmittel
- 10: Kartuschenaufnahme
- 11: Ablauf Substanz plus Lösungsmittel/Wasser
- 12: Strömungsrichtung Substanz plus Lösungsmittel/Wasser
- 13: Mischkammer
- 14: Verschluss, Membran
- 15: Lösemittel-, Wasserzulauf
- 16: Aufstechmittel, Dorn
- 17: Ablaufkanäle
- 18: Gaseinlass
- 19: Dichtung, Bunddichtung
- 20: Befestigungsmittel, Bund
- 21: Auflage
- 22: Kanal
- 23: Ein- und/oder Ausbuchtung der Kartuschenaufnahme
- 24: Halterung
- 25: Führung für die Kartuschenaufnahme
- 26: Ausnehmung
- 27: Führungskante
- 28: Dornführung
- 29: Abgeflachter Bereich
- 30: Rastleiste
- 31: Druckluftleitung
- 32: Druckluftauslass
- 33: Leitung
- 34: Befestigungsflansch
- 35: Flüssigkeitsanschluss
- 36: Auslöseelement
- 37: Klaue
- 38: Produktidentifikationskennung
- 39: Kennungsdetektor
- 40: Druckluftanschluss

## Patentansprüche

1. Dispenser mit einer Kartuschenhalterung (24), wobei die Kartuschenhalterung (24) mindestens eine Führung und/oder Verdrehsicherung (25, 27) für eine Kartuschenaufnahme (10) aufweist, wobei die Kartuschenhalterung (24) einen mit einer Druckluftquelle verbundenen Druckluftauslass (32) aufweist, **dadurch gekennzeichnet, dass** die Kartuschenhalterung (24) einen Flüssigkeitsanschluss zur Verbindung mit der Kartuschenaufnahme (10) aufweist, mit welchem ein Lösemittel zur Herstellung eines Getränkes zur Verfügung gestellt wird.

2. Dispenser nach Anspruch 1, **dadurch gekennzeichnet, dass** die Kartuschenhalterung (24) eine Ausnehmung (26) aufweist, die die Kartuschenaufnahme (10) zumindest teilweise aufnimmt, wobei die Ausnehmung (26) und die Kartuschenaufnahme (10) zumindest teilweise formschlüssig zusammenwirken.

3. Dispenser nach einem der voranstehenden Ansprüche, **dadurch gekennzeichnet, dass** die Kartuschenhalterung (24) ein Auslöseelement (36) aufweist, um ein Aufstechmittel (16) der Kartuschenaufnahme (10) von einer eingefahrenen Position in eine ausgefahrene Position zu überführen.

4. Dispenser nach einem der vorherigen Ansprüche, **dadurch gekennzeichnet, dass** die Kartuschenhalterung (24) einen Befestigungsflansch (34) umfasst, welcher die Kartuschenaufnahme (10) beim oder nach dem Einsetzen in die Kartuschenhalterung (24) formschlüssig und/oder kraftschlüssig umgreift.

5. Dispenser nach Anspruch 4, **dadurch gekennzeichnet, dass** der Befestigungsflansch (34) eine Auslösemechanik umfasst, die derart konfiguriert ist, dass eine Betätigung der Auslösemechanik zu einem Umgreifen der Kartuschenaufnahme (10) durch den Befestigungsflansch (34) und/oder zu einem Verschieben des Befestigungsflansches (34) derart, dass eine Relativbewegung zwischen Kartuschenaufnahme (10) und dem in Kontakt mit dem Aufstechmittel (16) stehenden Auslöseelement (36) erzeugt wird, wodurch das Aufstechmittel (16) von der eingefahrenen Position in die ausgefahrene Position überführt wird, führt.

6. Dispenser nach Anspruch 5, **dadurch gekennzeichnet, dass** die Auslösemechanik einen Handhebel zur manuellen Betätigung derselben umfasst, wobei vorzugsweise der Handhebel um eine zur Längsachse der Kartusche (1) im Wesentlichen parallele Drehachse drehbar ausgebildet ist.

7. Dispenser nach Anspruch 6, **dadurch gekennzeichnet, dass** die Auslösemechanik ein Übersetzungsgetriebe umfasst, welche eine Drehbewegung des Handhebels um die zur Längsachse parallele Drehachse in eine zur Längsachse im Wesentlichen parallele Translationsbewegung und insbesondere in ein Anheben oder Absenken der Kartuschenaufnahme (10) übersetzt.

8. Dispenser nach einem der vorhergehenden Ansprüche, **dadurch gekennzeichnet, dass** der Dispenser einen Kennungsdetektor (39) zum Auslesen einer Produktidentifikationskennung (38) auf der Kartusche (1) und/oder der Kartuschenaufnahme (10) aufweist, wobei der Kennungsdetektor (39) vorzugsweise oberhalb und/oder hinter der Kartuschenhalterung (24) angeordnet ist.

9. Dispenser nach einem der voranstehenden Ansprüche, **dadurch gekennzeichnet, dass** der Dispenser eine Auflage für einen Behälter aufweist, im dem das fertiggestellte Getränk oder Lebensmittel aufgefangen wird, wobei die Auflage schwenkbar und/oder höhenverstellbar vorgesehen ist.

10. System aufweisend einen Dispenser nach einem der voranstehenden Ansprüche und eine Kartuschenaufnahme (10) und eine Kartusche (1).

11. System nach Anspruch 10, **dadurch gekennzeichnet, dass** die Kartusche (1) mittels einer Membran (14) verschlossen ist und dass die Kartuschenaufnahme (10) ein Aufstechmittel (16) zum Perforieren der Membran (14) aufweist.

12. System nach Anspruch 11, **dadurch gekennzeichnet, dass** die Kartuschenaufnahme (10) eine Dornführung (28) aufweist, in welcher das Aufstechmittel (16) verschiebbar gelagert ist, wobei das Aufstechmittel (16) zwischen einer eingefahrenen Position, in welcher das Aufstechmittel (16) von der Membran (14) beabstandet ist, und einer ausgefahrenen Position, in welcher das Aufstechmittel (16) die Membran (14) der Kartusche (1) durchsticht und bis in die Kartusche (1) ragt, verschiebbar ist.

13. System nach Anspruch 12, **dadurch gekennzeichnet, dass** in das Aufstechmittel (16) eine Druckluftleitung (31) integriert ist und wobei an einer der Kartusche (1) abgewandten Seite des Aufstechmittels (16) ein, insbesondere von außerhalb der Kartuschenaufnahme (10) zugänglicher Druckluftanschluss (40) der Druckluftleitung (31) zur Verbindung mit einer Druckluftquelle ausgebildet ist und wobei an einer der Kartusche (1) zugewandten Seite des Aufstechmittels (16) ein Druckluftausgang der Druckluftleitung (34) zum Einblasen der Druckluft in die Kartusche (1) ausgebildet ist.

14. System nach Anspruch 13, **dadurch gekennzeichnet, dass** das System derart ausgebildet ist, dass eine Kopplung des Druckluftanschlusses (40) mit dem Druckluftauslass der Kartuschenhalterung (24) erfolgt, wenn die Kartuschenaufnahme (10) in die Kartuschenhalterung (24) eingesetzt ist und/oder die Auslösemechanik für den Befestigungsflansch betätigt wird.

15. System nach einem der Ansprüche 11 bis 14, **dadurch gekennzeichnet, dass** die Kartusche (1) mit einer Produktidentifikationskennung versehen ist, wobei die Produktidentifikationskennung bevorzugt auf einer dem Kennungsdetektor zugewandten Seite der Kartusche angeordnet ist und wobei besonders bevorzugt die Kartusche im Bereich der Produktidentifikationskennung einen im Wesentlichen ebenen Oberflächenabschnitt aufweist.

16. Verfahren zur Herstellung eines Getränks (70) mit einem System nach einem der Ansprüche 10 bis 15, **gekennzeichnet durch** die folgenden Schritte:
- Einsetzen eines aus Kartusche (1) und Kartuschenaufnahme (10) zusammengesetzten Kartuschensystems in die Kartuschenhalterung (24),
- Herstellen einer Fluidverbindung zwischen einer Fluidquelle des Dispensers und einem Zulauf (15) der Kartuschenaufnahme (10),
- Herstellen einer Druckluftverbindung zwischen einer Druckluftquelle des Dispensers und einem Druckluftanschluss (40) der Kartuschenaufnahme (10),
- Perforieren einer Membran (14) der Kartusche (1) durch Überführen eines Aufstechmittels (16) der Kartuschenaufnahme (10) von der eingefahrenen Position in die ausgefahrene Position,
- Überführen des Getränke- und/oder Lebensmittelsubstrats von der Kartusche (1) in eine Mischkammer (13) der Kartuschenaufnahme (10) durch Einspeisen von Druckluft in die Kartusche (1) durch einen Druckluftanschluss (40) der Kartuschenaufnahme (10),
- Einspeisen eines Verdünnungsmittels in die Mischkammer (13) durch den Zulauf (15) und
- Ableiten des in der Mischkammer (13) durch Vermischung des Getränke- und/oder Lebensmittelsubstrats mit dem Verdünnungsmittel erzeugten Getränks mittels eines Ablaufs (11) der Kartuschenaufnahme (10).

17. Verfahren nach Anspruch 16, **dadurch gekennzeichnet, dass** das Aufstechmittel (16) von einem Auslöseelement des Dispensers von der eingefahrenen Position in die ausgefahrene Position überführt wird, wobei die Kartuschenaufnahme (10) vorzugsweise derart gegen das feststehende Auslöseelement bewegt wird, dass das Aufstechmittel (16) von der eingefahrenen Position in die ausgefahrene Position überführt wird.

18. Verfahren nach Anspruch 17, **dadurch gekennzeichnet, dass** beim oder nach dem Einsetzen des Kartuschensystems (1) in die Kartuschenhalterung (24) ein Befestigungsflansch der Kartuschenhalterung (24) von einer manuell oder motorisch betätigbaren Auslösemechanik derart betrieben wird, dass die Kartuschenaufnahme (10) form- und/oder kraftschlüssig von dem Befestigungsflansch umgriffen wird und/oder dass der Befestigungsflansch derart verschoben wird, dass eine Relativbewegung zwischen der Kartuschenaufnahme (10) und dem in Kontakt mit dem Aufstechmittel stehenden Auslöseelement erzeugt wird, wodurch das Aufstechmittel von der eingefahrenen Position in die ausgefahrene Position überführt wird.

19. Verfahren nach einem der Ansprüche 16 bis 18, **dadurch gekennzeichnet, dass** zeitlich vor, während oder nach dem Einsetzen des Kartuschensystems in die Kartuschenhalterung (24) und/oder des Einspeisens von Druckluft in die Kartusche (1) und/oder des Einspeisens des Verdünnungsmittels in die Mischkammer (13) und/oder der Verschiebung des Befestigungsflansches gegenüber dem Auslöseelement die Produktidentifikationskennung von dem Kennungsdetektor ausgelesen wird.

20. Verfahren nach Anspruch 19, **dadurch gekennzeichnet, dass** die ausgelesene Produktidentifikationskennung von einer Auswerteeinheit ausgewertet wird und das Einspeisen der Druckluft und/oder des Verdünnungsmittels und/oder das Verschieben des Befestigungsflansches gegenüber dem Auslöseelement nur dann erfolgt, wenn die Produktidentifikationskennung von der Auswerteeinheit verifiziert werden kann.

21. Verfahren nach Anspruch 20, **dadurch gekennzeichnet, dass** die Eigenschaften des eingespeisten Verdünnungsmittels und insbesondere der zeitliche Verlauf des Volumenstroms, Gesamtvolumen, Druck, Förderpausen, Temperatur und/oder Carbonisierung des eingespeisten Verdünnungsmittels in Abhängigkeit der verifizierten Produktidentifikationskennung gesteuert werden.

22. Verfahren nach einem der Ansprüche 20 oder 21, **dadurch gekennzeichnet, dass** die Eigenschaften der eingespeisten Druckluft und insbesondere der zeitliche Verlauf des Volumenstroms, Gesamtvolumen, Förderpausen und/oder Druck der eingespeisten Druckluft in Abhängigkeit der verifizierten Produktidentifikationskennung gesteuert werden.

## Claims

1. Dispenser having a cartridge holder (24), wherein the cartridge holder (24) has at least one guide and/or twist prevention means (25, 27) for a cartridge receptacle (10), wherein the cartridge holder (24) has a compressed-air outlet (32) connected to a compressed-air source, **characterized in that** the cartridge holder (24) has a liquid connection for connecting to the cartridge receptacle (10), the liquid connection being used to make available a solvent for producing a beverage.

2. Dispenser according to Claim 1, **characterized in that** the cartridge holder (24) has a cutout (26) which at least partially receives the cartridge receptacle (10), wherein the cutout (26) and the cartridge receptacle (10) cooperate at least partially in a form-fitting manner.

3. Dispenser according to either of the preceding claims, **characterized in that** the cartridge holder (24) has a release element (36) in order to transfer a piercing means (16) of the cartridge receptacle (10) from a retracted position into an extended position.

4. Dispenser according to one of the preceding claims, **characterized in that** the cartridge holder (24) comprises a fastening flange (34) which engages around the cartridge receptacle (10) in a form-fitting and/or force-fitting manner during or after insertion into the cartridge holder (24).

5. Dispenser according to Claim 4, **characterized in that** the fastening flange (34) comprises a release mechanism which is configured such that actuation of the release mechanism results in the fastening flange (34) engaging around the cartridge receptacle (10) and/or in the fastening flange (34) being shifted such that a relative movement between the cartridge receptacle (10) and the release element (36) in contact with the piercing means (16) is generated, with the result that the piercing means (16) is transferred from the retracted position into the extended position.

6. Dispenser according to Claim 5, **characterized in that** the release mechanism comprises a hand lever for the manual actuation thereof, wherein, preferably, the hand lever is configured to be rotatable about an axis of rotation substantially parallel to the longitudinal axis of the cartridge (1).

7. Dispenser according to Claim 6, **characterized in that** the release mechanism comprises a transmission which converts a rotary movement of the hand lever about the axis of rotation parallel to the longitudinal axis into a movement in translation substantially parallel to the longitudinal axis, in particular into raising or lowering of the cartridge receptacle (10).

8. Dispenser according to one of the preceding claims, **characterized in that** the dispenser has an identifier detector (39) for reading a product identifier (38) on the cartridge (1) and/or the cartridge receptacle (10), wherein the identifier detector (39) is arranged preferably above and/or behind the cartridge holder (24).

9. Dispenser according to one of the preceding claims, **characterized in that** the dispenser has a support for a container in which the finished beverage or foodstuff is collected, wherein the support is intended to be pivotable and/or vertically adjustable.

10. System having a dispenser according to one of the preceding claims, and a cartridge receptacle (10) and a cartridge (1).

11. System according to Claim 10, **characterized in that** the cartridge (1) is closed by means of a membrane (14), and **in that** the cartridge receptacle (10) has a piercing means (16) for perforating the membrane (14).

12. System according to Claim 11, **characterized in that** the cartridge receptacle (10) has a spike guide (28) in which the piercing means (16) is mounted in a displaceable manner, wherein the piercing means (16) is displaceable between a retracted position, in which the piercing means (16) is away from the membrane (14), and an extended position, in which the piercing means (16) pierces the membrane (14) of the cartridge (1) and projects into the cartridge (1).

13. System according to Claim 12, **characterized in that** a compressed-air line (31) is integrated into the piercing means (16), and wherein a compressed-air connection (40) of the compressed-air line (31) for connecting to a compressed-air source is formed on a side of the piercing means (16) that is remote from the cartridge (1), said compressed-air connection (40) being accessible in particular from outside the cartridge receptacle (10), and wherein a compressed-air outlet of the compressed-air line (34) for blowing the compressed air into the cartridge (1) is formed on a side of the piercing means (16) that faces the cartridge (1).

14. System according to Claim 13, **characterized in that** the system is configured such that the compressed-air connection (40) is coupled to the compressed-air outlet of the cartridge holder (24) when the cartridge receptacle (10) has been inserted into the cartridge holder (24) and/or the release mechanism for the fastening flange is actuated.

15. System according to one of Claims 11 to 14, **characterized in that** the cartridge (1) is provided with a product identifier, wherein the product identifier is preferably arranged on a side of the cartridge that faces the identifier detector, and wherein particularly preferably the cartridge has a substantially planar surface portion in the region of the product identifier.

16. Method for producing a beverage (70) with a system according to one of Claims 10 to 15, **characterized by** the following steps:
- inserting a cartridge system made up of a cartridge (1) and cartridge receptacle (10) into the cartridge holder (24),
- establishing a fluidic connection between a fluid source of the dispenser and an inflow (15) of the cartridge receptacle (10),
- establishing a compressed-air connection between a compressed-air source of the dispenser and a compressed-air connection (40) of the cartridge receptacle (10),
- perforating a membrane (14) of the cartridge (1) by transferring a piercing means (16) of the cartridge receptacle (10) from the retracted position into the extended position,
- transferring the beverage substrate and/or foodstuff substrate from the cartridge (1) into a mixing chamber (13) of the cartridge receptacle (10) by injecting compressed air into the cartridge (1) through a compressed-air connection (40) of the cartridge receptacle (10),
- injecting a diluent into the mixing chamber (13) through the inflow (15), and
- discharging the beverage produced in the mixing chamber (13) by blending the beverage substrate and/or foodstuff substrate with the diluent by means of an outflow (11) of the cartridge receptacle (10).

17. Method according to Claim 16, **characterized in that** the piercing means (16) is transferred from the retracted position into the extended position by a release element of the dispenser, wherein the cartridge receptacle (10) is preferably moved against the fixed release element such that the piercing means (16) is transferred from the retracted position into the extended position.

18. Method according to Claim 17, **characterized in that**, during or after the insertion of the cartridge system (1) into the cartridge holder (24), a fastening flange of the cartridge holder (24) is operated by a release mechanism that is actuable manually or by a motor, such that the fastening flange engages around the cartridge receptacle (10) in a form-fitting and/or force-fitting manner, and/or such that the fastening flange is shifted such that a relative movement between the cartridge receptacle (10) and the release element in contact with the piercing means is generated, with the result that the piercing means is transferred from the retracted position into the extended position.

19. Method according to one of Claims 16 to 18, **characterized in that**, temporally before, during or after the insertion of the cartridge system into the cartridge holder (24) and/or the injection of compressed air into the cartridge (1) and/or the injection of the diluent into the mixing chamber (13) and/or the shifting of the fastening flange with respect to the release element, the product identifier is read by the identifier detector.

20. Method according to Claim 19, **characterized in that** the read product identifier is evaluated by an evaluation unit and the injection of the compressed air and/or of the diluent and/or the shifting of the fastening flange with respect to the release element takes place only when the product identifier can be verified by the evaluation unit.

21. Method according to Claim 20, **characterized in that** the properties of the injected diluent and in particular the temporal profile of the volumetric flow, overall volume, pressure, delivery pauses, temperature and/or carbonation of the injected diluent are controlled depending on the verified product identifier.

22. Method according to either of Claims 20 and 21, **characterized in that** the properties of the injected compressed air and in particular the temporal profile of the volumetric flow, overall volume, delivery pauses and/or pressure of the injected compressed air are controlled depending on the verified product identifier.

## Revendications

1. Distributeur comprenant un porte-cartouche (24), le porte-cartouche (24) présentant au moins un guide et/ou un blocage en rotation (25, 27) pour un logement de cartouche (10), le porte-cartouche (24) présentant une sortie d'air comprimé (32) reliée à une source d'air comprimé, **caractérisé en ce que** le porte-cartouche (24) présente un raccord de liquide pour la liaison avec le logement de cartouche (10), avec lequel un solvant est mis à disposition pour la fabrication d'une boisson.

2. Distributeur selon la revendication 1, **caractérisé en ce que** le porte-cartouche (24) présente un évidement (26) qui reçoit au moins partiellement le logement de cartouche (10), l'évidement (26) et le logement de cartouche (10) coopérant au moins partiellement par complémentarité de forme.

3. Distributeur selon l'une quelconque des revendications précédentes, **caractérisé en ce que** le porte-cartouche (24) présente un élément de déclenchement (36) pour transférer un moyen de perçage (16) du logement de cartouche (10) d'une position rétractée à une position déployée.

4. Distributeur selon l'une quelconque des revendications précédentes, **caractérisé en ce que** le porte-cartouche (24) comprend une bride de fixation (34) qui entoure le logement de cartouche (10) par complémentarité de forme et/ou par force lors de ou après l'insertion dans le porte-cartouche (24).

5. Distributeur selon la revendication 4, **caractérisé en ce que** la bride de fixation (34) comprend un mécanisme de déclenchement qui est configuré de telle sorte qu'un actionnement du mécanisme de déclenchement conduit à un entourage du logement de cartouche (10) par la bride de fixation (34) et/ou à un déplacement de la bride de fixation (34) de telle sorte qu'un mouvement relatif entre le logement de cartouche (10) et l'élément de déclenchement (36) en contact avec le moyen de perçage (16) est produit, par lequel le moyen de perçage (16) est transféré de la position rétractée à la position déployée.

6. Distributeur selon la revendication 5, **caractérisé en ce que** le mécanisme de déclenchement comprend un levier manuel pour l'actionnement manuel, le levier manuel étant de préférence configuré sous forme rotative autour d'un axe de rotation essentiellement parallèle à l'axe longitudinal de la cartouche (1).

7. Distributeur selon la revendication 6, **caractérisé en ce que** le mécanisme de déclenchement comprend un engrenage de conversion qui convertit un mouvement de rotation du levier manuel autour de l'axe de rotation parallèle à l'axe longitudinal en un mouvement de translation essentiellement parallèle à l'axe longitudinal et notamment en un soulèvement ou un abaissement du logement de cartouche (10).

8. Distributeur selon l'une quelconque des revendications précédentes, **caractérisé en ce que** le distributeur présente un détecteur de code (39) pour lire un code d'identification de produit (38) sur la cartouche (1) et/ou le logement de cartouche (10), le détecteur de code (39) étant de préférence agencé au-dessus et/ou derrière le porte-cartouche (24).

9. Distributeur selon l'une quelconque des revendications précédentes, **caractérisé en ce que** le distributeur présente un support pour un récipient dans lequel la boisson ou l'aliment fini(e) est recueilli(e), le support étant prévu pour pouvoir pivoter et/ou être réglé en hauteur.

10. Système comprenant un distributeur selon l'une quelconque des revendications précédentes et un logement de cartouche (10) et une cartouche (1).

11. Système selon la revendication 10, **caractérisé en ce que** la cartouche (1) est fermée au moyen d'une membrane (14) et **en ce que** le logement de cartouche (10) présente un moyen de perçage (16) pour perforer la membrane (14).

12. Système selon la revendication 11, **caractérisé en ce que** le logement de cartouche (10) présente un guide de mandrin (28) dans lequel le moyen de perçage (16) est monté de manière déplaçable, le moyen de perçage (16) pouvant être déplacé entre une position rétractée, dans laquelle le moyen de perçage (16) est espacé de la membrane (14), et une position déployée dans laquelle le moyen de perçage (16) perce la membrane (14) de la cartouche (1) et s'étend jusque dans la cartouche (1).

13. Système selon la revendication 12, **caractérisé en ce qu'**une conduite d'air comprimé (31) est intégrée dans le moyen de perçage (16) et, sur un côté du moyen de perçage (16) détourné de la cartouche (1), un raccord d'air comprimé (40) de la conduite d'air comprimé (31), notamment accessible depuis l'extérieur du logement de cartouche, est formé pour la liaison avec une source d'air comprimé et une sortie d'air comprimé de la conduite d'air comprimé (34) est formée sur un côté du moyen de perçage (16) tourné vers la cartouche (1) pour l'injection de l'air comprimé dans la cartouche (1).

14. Système selon la revendication 13, **caractérisé en ce que** le système est configuré de telle sorte qu'un couplage du raccord d'air comprimé (40) avec la sortie d'air comprimé du porte-cartouche (24) a lieu lorsque le logement de cartouche (10) est inséré dans le porte-cartouche (24) et/ou le mécanisme de déclenchement pour la bride de fixation est actionné.

15. Système selon l'une quelconque des revendications 11 a 14, **caractérisé en ce que** la cartouche (1) est munie d'un code d'identification de produit, le code d'identification de produit étant de préférence agencé sur un côté de la cartouche tourné vers le détecteur de code et, de manière particulièrement préférée, la cartouche présentant une section de surface essentiellement plane dans la zone du code d'identification de produit.

16. Procédé de fabrication d'une boisson (70) avec un système selon l'une quelconque des revendications 10 à 15, **caractérisé par** les étapes suivantes :
- l'insertion d'un système de cartouche composé d'une cartouche (1) et d'un logement de cartouche (10) dans le porte-cartouche (24),
- l'établissement d'une liaison fluidique entre une source de fluide du distributeur et une arrivée (15) du logement de cartouche (10),
- l'établissement d'une liaison d'air comprimé entre une source d'air comprimé du distributeur et un raccord d'air comprimé (40) du logement de cartouche (10),
- la perforation d'une membrane (14) de la cartouche (1) par transfert d'un moyen de perçage (16) du logement de cartouche (10) de la position rétractée à la position déployée,
- le transfert du substrat de boisson et/ou d'aliment de la cartouche (1) dans une chambre de mélange (13) du logement de cartouche (10) par introduction d'air comprimé dans la cartouche (1) par un raccord d'air comprimé (40) du logement de cartouche (10),
- l'introduction d'un agent diluant dans la chambre de mélange (13) par l'arrivée (15) et
- l'évacuation de la boisson produite dans la chambre de mélange (13) par mélange du substrat de boisson et/ou d'aliment avec l'agent diluant au moyen d'une sortie (11) du logement de cartouche (10).

17. Procédé selon la revendication 16, **caractérisé en ce que** le moyen de perçage (16) est transféré de la position rétractée à la position déployée par un élément de déclenchement du distributeur, le logement de cartouche (10) étant de préférence déplacé contre l'élément de déclenchement fixe de telle sorte que le moyen de perçage (16) est transféré de la position rétractée à la position déployée.

18. Procédé selon la revendication 17, **caractérisé en ce que**, lors de ou après l'insertion du système de cartouche (1) dans le porte-cartouche (24), une bride de fixation du porte-cartouche (24) est actionnée par un mécanisme de déclenchement actionnable manuellement ou par moteur, de telle sorte que le logement de cartouche (10) est entouré par la bride de fixation par complémentarité de forme et/ou par force et/ou de telle sorte que la bride de fixation est déplacée de telle sorte qu'un mouvement relatif entre le logement de cartouche (10) et l'élément de déclenchement en contact avec le moyen de perçage est produit, par lequel le moyen de perçage est transféré de la position rétractée à la position déployée.

19. Procédé selon l'une quelconque des revendications 16 à 18, **caractérisé en ce que**, temporellement avant, pendant ou après l'insertion du système de cartouche dans le porte-cartouche (24) et/ou l'introduction d'air comprimé dans la cartouche (1) et/ou l'introduction de l'agent diluant dans la chambre de mélange (13) et/ou le déplacement de la bride de fixation par rapport à l'élément de déclenchement, le code d'identification de produit est lu par le détecteur de code.

20. Procédé selon la revendication 19, **caractérisé en ce que** le code d'identification de produit lu est évalué par une unité d'évaluation et l'introduction de l'air comprimé et/ou de l'agent diluant et/ou le déplacement de la bride de fixation par rapport à l'élément de déclenchement n'a lieu que si le code d'identification de produit peut être vérifié par l'unité d'évaluation.

21. Procédé selon la revendication 20, **caractérisé en ce que** les propriétés de l'agent diluant introduit, et notamment l'évolution temporelle du débit volumique, du volume total, de la pression, des pauses de transport, de la température et/ou de la carbonisation de l'agent diluant introduit, sont commandées en fonction du code d'identification de produit vérifié.

22. Procédé selon l'une quelconque des revendications 20 ou 21, **caractérisé en ce que** les propriétés de l'air comprimé introduit et notamment l'évolution temporelle du débit volumique, du volume total, des pauses de transport et/ou de la pression de l'air comprimé introduit sont commandées en fonction du code d'identification de produit vérifié.
